Europäisches Patentamt

European Patent Office

Office européen des brevets

(11) Veröffentlichungsnummer: **0 578 315 A1**

# (12) EUROPÄISCHE PATENTANMELDUNG

(21) Anmeldenummer: **93201927.6**

(22) Anmeldetag: **01.07.93**

(51) Int. Cl.5: **H04J 3/16**

(30) Priorität: **09.07.92 DE 4222546**
 **09.07.92 DE 4222547**

(43) Veröffentlichungstag der Anmeldung:
 **12.01.94 Patentblatt 94/02**

(84) Benannte Vertragsstaaten:
 **DE ES FR GB IT PT SE**

(71) Anmelder: **Philips Patentverwaltung GmbH**
 **Wendenstrasse 35c**
 **D-20097 Hamburg(DE)**

(84) **DE**

(71) Anmelder: **PHILIPS ELECTRONICS N.V.**
 **Groenewoudseweg 1**
 **NL-5621 BA Eindhoven(NL)**

(84) **ES FR GB IT PT SE**

(72) Erfinder: **Scheffel, Klaus, c/o Philips**
 **Patentverwaltung GmbH**
 **Wendenstrasse 35**
 **D-2000 Hamburg 1(DE)**
 Erfinder: **Niegel, Michael, c/o Philips**
 **Patentverwaltung GmbH**
 **Wendenstrasse 35**
 **D-2000 Hamburg 1(DE)**
 Erfinder: **Leuschner, Helmut, c/o Philips**
 **Patentver. GmbH**
 **Wendenstrasse 35**
 **D-2000 Hamburg 1(DE)**

(74) Vertreter: **Volmer, Georg, Dipl.-Ing. et al**
 **Philips Patentverwaltung GmbH,**
 **Wendenstrasse 35c**
 **D-20097 Hamburg (DE)**

(54) **Synchrones Übertragungssystem.**

(57) Die Erfindung bezieht sich auf ein synchrones Übertragungssysstem mit einer Schaltungsanordnung zur Bestimmung der Datenbytes eines zu empfangenden oder zu sendenden Signals. Diese enthält eine Steueranordnung (2), die wenigstens einen Zähler (11) zur Markierung der Pointerbytes jeder auftretbaren hochbitratigen Transporteinheit und die wenigstens einen Zähler (6) zur Markierung der Datenbytes mit einem Zählerstand jeder auftretbaren hochbitratigen Transporteinheit enthält. Ferner enthält die Steueranordnung (2) für jede auftretbare Gruppe von niederbitratigen Transporteinheiten in jeder auftretbaren höchstbitratigen Transporteinheit wenigstens einen Positionszähler, der zur Markierung der Datenbytes mit einem Zählerstand in einer niederbitratigen Transporteinheit der Gruppe vorgesehen ist. Die Steueranordnung (2) ist dann noch anhand der Zählerstände und der Information über die Transporteinheiten des Signals wenigstens zur Kennzeichnung der Nutzdatenbytes und der Pointerbytes vorgesehen.

Rank Xerox (UK) Business Services
(3. 10/3.6/3.3. 1)

FIG.11

Die Erfindung bezieht sich auf ein synchrones Übertragungssystem mit einer Schaltungsanordnung zur Bestimmung der Datenbytes eines zu empfangenden oder zu sendenden Signals. Unter einem solchen synchronen Übertragungssystem ist ein System der synchronen digitalen Hierachie (SDH) oder ein System eines synchronen optischen Netzwerkes (SONET) zu verstehen.

Eine solche Schaltungsanordnung eines synchronen Übertragungssystems ist aus der deutschen Patentanmeldung P 41 08 429 bekannt, die ein STM-1-Signal der synchronen digitalen Hierarchie verarbeitet. Das synchrone Übertragungssystem dient zur Bestimmung und zur Auswertung von Pointerbytes und zur Steuerung des Einschreibvorganges von Datenbytes beispielsweise eines empfangenden STM-1-Signals. Weiter dient das System zur Bildung von Pointerbytes und zur Steuerung des Auslesevorgangs der Datenbytes aus dem Pufferspeicher für ein zu sendendes STM-1-Signals.

Das STM-1-Signal (Signal der synchronen digitalen Hierarchie) ist nach Rahmen strukturiert und weist außer den eigentlichen Nutzdaten des Signals, Steuerinformationen und Stopfdaten auf, die als Datenlücken bezeichnet werden. Ein STM-1-Rahmen besteht aus 270 Spalten und 9 Zeilen (pro Zeile 270 Bytes). In den Zeilen 1 bis 3 und 5 bis 9, jeweils in den Spalten 1 bis 9 ist der "Section Overhead" (SOH) für Steuerungs- und Fehlererkennungsinformationen und in dem restlichen Bereich (AU-Nutzdatenbereich = AU-Payload) Daten des Signals, Stopfdaten und weitere Steuerungsinformationen untergebracht.

In dem AU-Nutzdatenbereich können mehrere verschiedene Container (C-4, C-3, C-2, C-12 und C-11) untergebracht sein. Unter einem Container wird die Grundverpackungseinheit für digitale Nutzsignale verstanden. Beispielsweise kann in einem STM-1-Rahmen eine Verwaltungseinheit ("Administrative Unit") AU-4 mit einem Container C-4 für eine Bitrate von 139,264 MBit/s eingebracht sein. Oder es können drei Verwaltungseinheiten AU-3 in dem STM-1-Rahmen untergebracht sein. Davon enthält z.B. eine Verwaltungseinheit AU-3 einen Container C-3 für eine Bitrate von 44,736 MBit/s. Die zweite Verwaltungseinheit AU-3 kann beispielsweise sieben "Tributary Unit Groups" TUG-2 mit jeweils einem Container C-2 für eine Bitrate von 6,312 MBit/s enthalten. In der dritten Verwaltungseinheit AU-3 können ferner sieben TUG-2 mit jeweils drei Containern C-12 für eine Bitrate von 2,048 MBit/s eingefügt sein. Aus den Containern werden durch Hinzufügung von Steuerinformationen und Stopfinformationen übergeordnete hochbitratige und niederbitratige Transporteinheiten (VC-4, VC-3, TU-3, TU-2, TU-12 und TU-11) gebildet. Unter einer hochbitratigen Transporteinheit (VC-4, VC-3) wird eine Transporteinheit verstanden, die weitere Transporteinheiten enthalten kann. Unter einer niederbitratigen Transporteinheit wird eine Transporteinheit verstanden, die keine anderen Transporteinheiten enthalten kann.

Aus der obengenannten Patentanmeldung ist bekannt, daß jeweils für jede in einem STM-1-Signal enthaltene Transporteinheit ein eigener Zähler zur Bestimmung der Datenbytes vorhanden ist. Wenn beispielsweise ein STM-1-Signal mit einem VC-4, der der nur VC-12 enthält, übertragen wird, ist für den VC-4 und für jeden VC-12 ein eigener Zähler vorhanden. Über die gleiche Schaltungsanordnung kann später nur dann ein STM-1-Signal mit einem VC-4, der VC-11 enthält, übertragen werden, wenn weitere Zähler für den VC-4 und für jeden VC-11 vorhanden sind. Hierbei kann also nicht derselbe Zähler für den VC-4, der die VC-12 enthält, und den VC-4 verwendet werden, der die VC-11 enthält. Jede autretbare oder denkbare Transporteinheiten-Konfiguration im STM-1-Signal benötigt also für jede vorkommende Transporteinheit eigene Zähler, die für eine andere Transporteinheiten-Konfiguration nicht benutzt werden können. Eine solche Schaltungsanordnung ist sehr aufwendig.

Der Erfindung liegt die Aufgabe zugrunde, eine Schaltungsanordnung der eingangs genannten Art zu schaffen, die einen geringen Aufwand benötigt.

Die Aufgabe wird bei einem synchronen Übertragungssystem mit einer Schaltungsanordnung zur Bestimmung der Datenbytes eines zu empfangenden oder zu bildenden Signals der eingangs genannten Art durch folgende Merkmale gelöst: Die Schaltungsanordnung enthält eine Steueranordnung, die wenigstens einen Zähler zur Markierung der Pointerbytes jeder auftretbaren hochbitratigen Transporteinheit enthält,

die wenigstens einen Zähler zur Markierung der Datenbytes mit einem Zählerstand jeder auftretbaren hochbitratigen Transporteinheit enthält,

die für jede auftretbare Gruppe von niederbitratigen Transporteinheiten in jeder auftretbaren höchstbitratigen Transporteinheit wenigstens einen Positionszähler enthält, der zur Markierung der Datenbytes mit einem Zählerstand in einer niederbitratigen Transporteinheit der Gruppe vorgesehen ist, und

die anhand der Zählerstände und der Information über die Transporteinheiten des Signals wenigstens zur Kennzeichnung der Nutzdatenbytes und der Pointerbytes vorgesehen ist.

Das erfindungsgemäße synchrone Übertragungssystem enthält eine Steueranordnung mit verschiedenen Zählern zur Bestimmung von Pointerbytes und Datenbytes von Transporteinheiten. Hierbei ist jeweils wenigstens ein Zähler für eine hochbitratige Transporteinheit (z. B. VC-4 bei einem STM-1-Signal) vorhanden. Werden drei hochbitratige Transporteinheiten VC-3 in einem STM-1-Signal übertragen, sind 3

3

Zähler erforderlich. Die Pointerbytes für die VC-4 bzw. VC-3 bei einem STM-1-Signal werden durch wenigstens einen weiteren Zähler gekennzeichnet. Für jede niederbitratige Transporteinheit ist ebenfalls mindestens ein Positionszähler vorhanden, der die Datenbytes in einer oder mehreren niederbitratigen Transporteinheiten markiert. Ein solcher Positionszähler wird dabei unabhängig von der jeweiligen Konfiguration in dem STM-1-Signal für einen bestimmten Typ einer niederbitratigen Transporteinheit bzw. Gruppe von niederbitratigen Transporteinheiten verwendet. Beispielsweise kann ein Positionszähler für alle VC-11, die in einer TUG-2 enthalten sind, benutzt werden. In der Steueranordnung werden anhand der Zählerstände die Nutzdatenbytes und die Pointerbytes gekennzeichnet.

Eine solche Steueranordnung weist einen geringeren Hardwareaufwand als die bekannte Schaltungsanordnung auf und kann bei jeder Art von Zusammenstellung der Transporteinheiten die Datenbytes markieren bzw. zählen.

Durch die erfindungsgemäßen Maßnahmen kann ein in dem synchronen Übertragungssystem enthaltener Pufferspeicher gesteuert werden. Hierbei ist die Steueranordnung

- zur Einschreibung oder Auslesung von Nutzdatenbytes eines Signals in einen oder aus einen Pufferspeicher,
- zur Zuordnung jeweils eines Schreib- oder Lesezählers zu jeweils einer Transporteinheit des Signals,
- zur Bildung einer Pufferspeicheradresse wenigstens aus dem Zählerstand des dem Nutzdatenbyte zugeordneten Schreib- oder Lesezählers und
- zur Freigabe des Pufferspeichers bei Nutzdatenbytes vorgesehen.

Die Steueranordnung ermittelt die im Signal (z. B. STM-1-Signal) vorhandenen Transporteinheiten und weist beispielsweise für einen Einschreibvorgang von Nutzdatenbytes in den Pufferspeicher jedem Container einen Schreibzähler zu. Für einen Auslesevorgang von Nutzdatenbytes aus dem Pufferspeicher wird jedem Container ein Lesezähler zugewiesen. Die Nutzdatenbytes enthalten die eigentliche Information des zu transportierenden Signals. Das Nutzdatenbyte wird in einer Speicherstelle des Pufferspeichers abgelegt, deren Pufferspeicheradresse mindestens aus dem Schreibzählerstand gebildet ist. Insbesondere bei bestimmten niederbitratigen Transporteinheiten (TU-2, TU-12, TU-11) kann, um den Speichervorgang übersichtlicher zu gestalten, die Pufferspeicheradresse aus einer einer Transporteinheit zugeordneten Adresse und dem Schreibzählerstand gebildet werden.

Ein Datenbyte kann in den Pufferspeicher nur dann eingelesen werden, wenn dieses ein Nutzdatenbyte ist. Ebenso wird aus dem Pufferspeicher nur ein Nutzdatenbyte ausgelesen. Um ein Nutzdatenbyte zu bestimmen, wird die Position jedes Datenbytes im Signal (beispielsweise STM-1-Signal) und in der Transporteinheit, zu dem das Nutzdatenbyte gehört, von der Steueranordnung mittels der Zähler bestimmt. Soll ein Nutzdatenbyte in den Pufferspeicher eingeschrieben werden, wird der Pufferspeicher zur Einschreibung freigegeben. Umgekehrt kann, wenn ein Nutzdatenbyte in das Signal (z.B. STM-1-Signal) eingefügt werden soll, der Pufferspeicher zur Auslesung freigegeben werden.

Durch die Schaltungsanordnung des synchronen Übertragungssystems wird auch eine Auswertung der Pointerbytes vorgenommen. Hierbei ist die Steueranordnung zur Entnahme wenigstens von Pointerwerten aus den gekennzeichneten Pointerbytes oder zur Einfügung wenigstens von Pointerwerten in die gekennzeichneten Pointerbytes vorgesehen ist.

Die Steueranordnung ermittelt mittels Zählern die Pointerbytes im Signal. Die sogenannten AU-Pointerbytes (H1-, H2-und H3-Pointerbytes) für eine Verwaltungseinheit AU-4 oder AU-3, die in den Spalten 1 bis 9 in der vierten Zeile des STM-1-Rahmens transportiert werden, enthalten unter anderem die Information über den Anfang eines VC-4 oder VC-3 in dem AU-Nutzdatenbereich (Zeile 1 bis 9, Spalten 10 bis 270) und Stopfinformationen. An entsprechenden Stellen im AU-Nutzdatenbereich werden die sogenannten TU-Pointerbytes (V1-, V2- und V3-Pointerbytes für TU-2, TU-12 und TU-11 und H1-, H2- und H3-Pointerbytes für TU-3) transportiert. Der Anfang eines VC-4, VC-3, TU-3, TU-2, TU-12 oder TU-11 ist in den in den Pointerbytes transportierten Pointerwert enthalten.

Nach der Kennzeichnung werden aus den Pointerbytes wenigstens die Pointerwerte beim empfangenen Signal entnommen oder wenigstens die Pointerwerte in die Pointerbytes des zu sendenden Signals eingefügt. Weitere in den Pointerbytes zu transportierende Informationen können ebenfalls entnommen oder eingefügt werden.

In einer Weiterbildung der Erfindung ist die Steueranordnung durch Auswertung der Zählerstände der Zähler

- zur Kennzeichnung der AU-Nutzdatenbytes und der AU-Pointerbytes,
- zur Zuordnung der AU-Nutzdatenbytes zu den einzelnen Transporteinheiten,
- zur Kennzeichnung der TU-Pointerbytes und
- zur Kennzeichnung der negativen Stopfstelle als Nutzdatenbyte bei Vorliegen einer negativen Stopfaktion und zur Aufhebung der Kennzeichnung der positiven Stopfstelle als Nutzdatenbyte bei Vorliegen einer positiven Stopfaktion vorgesehen.

Die Zuordnung der Daten zu den Transporteinheiten wird in der Steueranordnung durch Auswertung der Zählerstände durchgeführt. Nach der Detektierung von Startbytes werden die AU-Nutzdatenbytes und die AU-Pointerbytes durch Detektierung von Zählerständen ermittelt und dann gekennzeichnet. Beispielsweise wird ein Zeiger gesetzt, der AU-Nutzdatenbytes angibt. Ferner werden die AU-Nutzdatenbytes weiter aufgeschlüsselt, d.h. sie werden der Transporteinheit zugeordnet, deren Nutzdaten sie enthalten. Wenn eine positive Stopfaktion vorliegt, werden hier keine Nutzdaten aus dem Signal entnommen oder in das Signal eingefügt. Bei einer positiven Stopfaktion wird die Nutzinformation ausgelassen. Im Gegensatz hierzu wird bei einer negativen Stopfaktion an dieser Stopfstelle Nutzinformation übertragen. Eine solche Stopfaktion muß beim Einschreibvorgang durch Auswertung der Pointerbytes ermittelt werden. Sind die Pointerbytes ausgewertet, kann bestimmt werden, ob an dieser Stopfstelle Nutzdatenbytes vorliegen. Beim Auslesevorgang wird von einer Stopfentscheidungsschaltung, die z.B. aus der deutschen Patentanmeldung P 41 08 429 bekannt ist, angegeben, ob eine Stopfaktion vorgenommen werden muß.

Um die Position der AU-Pointerbytes im Signal zu ermitteln, enthält die Steueranordnung wenigstens einen zur Zählung der AU-Pointerbytes vorgesehenen Zähler. Bei Erreichen bestimmter Zählerstände ist die Steueranordnung weiter zur Bildung einer Pointerkennzeichnung für ein AU-Pointerbyte oder eine mögliche Stopfstelle vorgesehen. Die Pointerkennzeichnung kennzeichnet ein Datenbyte als Pointerbyte oder eine mögliche positive oder negative Stopfstelle. Bei einer positiven Stopfaktion wird die Nutzinformation ausgelassen. Das bedeutet, daß nach den AU-Pointerbytes das nächste Datenbyte keine Nutzinformation enthält. Im Gegensatz hierzu wird bei einer negativen Stopfaktion an dieser Stopfstelle Nutzinformation übertragen. Das H3-Pointerbyte würde in diesem Fall eine Nutzinformation enthalten.

Um die Position der TU-Pointerbytes im Signal zu ermitteln, enthält die Steueranordnung wenigstens eine zur Zählung der Datenbytes im AU-Nutzdatenbereich vorgesehene Zähleranordnung. Durch Auswertung der Zählerstände der Zähleranordnung ist die Steueranordnung weiterhin zur Bestimmung der Position der Datenbytes im AU-Nutzdatenbereich, zur Zuordnung der Datenbytes zu den TU-Transporteinheiten und zur Bildung einer Pointerkennzeichnung für ein TU-Pointerbyte oder eine mögliche Stopfstelle vorgesehen. Die Zähleranordnung bestimmt die Position der Datenbytes im AU-Nutzdatenbereich, indem sie den Datenbytes eine TU-3, TU-2, TU-12 oder TU-11 (TU-Transporteinheiten) zuordnet und innerhalb der TU-Transporteinheiten die jeweiligen Positionen der Datenbytes und damit die Positionen der Pointerbytes und von möglichen Stopfstellen durch Detektierung von wenigstens einem Zählerstand bestimmt.

In einer Ausführungsform für die Zähleranordnung ist

- wenigstens jeweils ein Spaltenzähler zur Bestimmung der Spalte und wenigstens jeweils ein Zeilenzähler zur Bestimmung der Zeile in einer AU-4- oder AU-3-Verwaltungseinheit,
- ein Positionszähler für wenigstens eine TU-3 zur Kennzeichnung der Nutzdatenbytes in einer TU-3,
- ein Zähler zur Kennzeichnung von TUG-2,
- wenigstens ein Zähler zur Kennzeichnung von TU-12 in wenigstens einer TUG-2,
- wenigstens ein Zähler zur Kennzeichnung von TU-11 in wenigstens einer TU-11 und
- jeweils wenigstens ein Positionszähler für jeweils wenigstens eine TU-2, eine TU-12 und eine TU-11 zur Kennzeichnung der Nutzdatenbytes in einer TU-2, einer TU-12 und einer TU-11 enthalten.

In einer Verwaltungseinheit AU-3 können Container C-3, C-2, C-12 und C-11 transportiert werden. Die übergeordneten "Tributary Units" TU-2, TU-12 und TU-11 werden in "Tributary Unit Groups" TUG-2 eingefügt. Um jeweils die Nutzdatenbytes und die Pointerbytes und evtl. vorhandene feste und variable Stopfstellen in einer solchen TU-Transporteinheit zu detektieren, sind jeweils Spalten- und Zeilenzähler, Zähler zur Kennzeichnung von TUG-2, TU-12 und TU-11 und Positionszähler für TU-2, TU-12 und TU-11 vorhanden. Es ist dabei nur erforderlich, jeweils in einer TUG-2 zu ermitteln, wie die Datenbytes verteilt sind. Ebenso muß nur der Inhalt einer in der TUG-2 zu transportierenden TU-2, TU-12 oder TU-11 detektiert werden. Es ist aber auch möglich und aufwendiger für jeden möglichen Container eigene Zähler zu benutzen. Die Zähleranordnung bestimmt also entweder für eine Verwaltungseinheit AU-4 oder AU-3 jede denkbare Konstellation von Transporteinheiten und bestimmt dazu die Nutzdatenbytes mittels der Positionszähler und beispielsweise feste Stopfstellen mittels der Spalten- und Zeilenzähler.

Der Positionszähler für eine "Tributary Unit" TU-3 ist für die Kennzeichnung des Inhaltes einer AU-3 nicht erforderlich. Eine TU-3 kann nur in einer Verwaltungseinheit AU-4 transportiert werden. Um die Zähleranordnung einfach zu gestalten und für beide Verwaltungseinheiten AU-3 und AU-4 zu verwenden, ist dieser Positionszähler auch für eine AU-3 vorhanden. Für einen STM-1-Rahmen sind also für die darin zu transportierenden drei Verwaltungseinheiten AU-3 drei solcher Zähleranordnungen erforderlich. Um diese drei Zähleranordnungen auch für eine Verwaltungseinheit AU-4 ausnutzen zu können, kann eine AU-4 in drei Bereiche unterteilt werden, die sich spaltenweise abwechseln. Die in der Erfindung verwendete Zähleranordnung weist gegenüber dem bisher aus dem Stand der Technik bekannten eine bedeutend geringere Anzahl von Zählern auf.

Zur Bildung einer Pufferspeicheradresse dient eine in der Steueranordnung enthaltene Adressierungsanordnung, die

- bei Vorliegen eines VC-4 oder eines VC-3 die Bildung der Pufferspeicheradresse aus dem Zählerstand des jeweiligen zugeordneten Schreib- oder Lesezählers,
- bei Vorliegen einer TU-2 zur Bildung der Pufferspeicheradresse aus dem Zählerstand des jeweiligen zugeordneten Schreib- oder Lesezählers und aus dem Zählerstand des Zählers zur Kennzeichnung von TUG-2 und
- bei Vorliegen einer TU-12 oder TU-11 zur Bildung der Pufferspeicheradresse aus dem Zählerstand des jeweiligen zugeordneten Schreib- oder Lesezählers und aus dem Zählerstand des Zählers zur Kennzeichnung von TUG-2 und aus dem Zählerstand des Zählers zur Kennzeichnung von TU-12 oder TU-11 vorgesehen ist.

In der Adressierungsanordnung wird also zuerst ermittelt, zu welcher Transporteinheit das Nutzdatenbyte gehört. Liegt ein Nutzdatenbyte eines virtuellen Containers VC-4 oder VC-3 vor, so wird die Pufferspeicheradresse aus dem Zählerstand des jeweiligen dem virtuellen Container zugeordneten Schreib- oder Lesezähler, die jeweils Modulo-Zähler sind, entnommen. Der Modulowert richtet sich nach der erforderlichen Puffertiefe, d.h. welche zeitlichen Verschiebungen zwischen Einschreibvorgang und Auslesevorgang kompensiert werden müssen. Bei einer TU-2 wird die Pufferspeicheradresse aus dem Zählerstand des Zählers zur Kennzeichnung von TUG-2 und aus dem Zählerstand des zugeordneten Schreib- oder Lesezähler gebildet. Hierbei sind die höherwertigen Bits der Pufferspeicheradresse durch den Zählerstand des Zählers zur Kennzeichnung der TUG-2 und die niederwertigen Bits aus dem Zählerstand des Schreib- oder Lesezähler zusammengesetzt. Bei den TU-12 oder TU-11 wird zusätzlich noch der Zählerstand der Zähler zur Kennzeichnung von TU-12 oder TU-11 zu den höherwertigen Bits der Pufferspeicheradresse zugeschlagen.

In einer Weiterbildung der Erfindung enthält die Steueranordnung eine Pointerschaltung, die bei Vorliegen einer Pointerkennzeichnung für die H1- bzw. V1- und H2- bzw. V2-Pointerbytes jeweils zur Entnahme eines Teils eines Pointerwertes aus den oder zur Einfügung eines Teils eines Pointerwertes in die Pointerbytes vorgesehen ist. Die Pointerschaltung detektiert also wenigstens die Pointerkennzeichnung für ein H1-, H2-, V1- oder V2-Pointerbyte und entnimmt bzw. fügt jeweils die Teile, aus denen sich der Pointerwert zusammensetzt, aus den bzw. in die H1-, H2-, V1- oder V2-Pointerbytes ein.

Der aktuelle Pointerwert wird jeweils mit Kenntnis des bisherigen aktuellen Pointerwertes gebildet. Unter dem aktuellen Pointerwert ist der Pointerwert zu verstehen, der den Anfang der entsprechenden Transporteinheit angibt. Daher enthält die Pointerschaltung einen Pointerspeicher, der wenigstens zur Speicherung eines Pointerwertes an einer durch eine von der in der Steueranordnung enthaltenen Adressierungsanordnung zu bildenden Pointeradresse gekennzeichneten Speicherplatz vorgesehen ist. Für die VC-4 und VC-3 werden fest vorgegebene Pointeradressen, für die TU-2 werden von dem Zähler zur Kennzeichnung einer TUG-2 abhängige Pointeradressen und für die TU-12 oder TU-11 von dem Zähler zur Kennzeichnung einer TUG-2 und von dem jeweiligen Zähler zur Kennzeichnung einer TU-12 oder TU-11 abhängigen Pointeradressen erzeugt.

Bei dem empfangenen Signal wird die Bildung des aktuellen Pointerwertes für eine TU-Transporteinheit durch Auswertung des bisherigen aktuellen, des neu empfangenen und des zuletzt empfangenen Pointerwertes durchgeführt. Die Pointerschaltung ist bei Übereinstimmung des neu empfangenen und des zuletzt empfangenen Pointerwertes und bei Nichtübereinstimmung des bisherigen aktuellen Pointerwertes und des neuen Pointerwertes dabei höchstens zur Setzung des neu empfangenen Pointerwertes als aktueller Pointerwert vorgesehen. Sonst bleibt der bisherige aktuelle Pointerwert auch der aktuelle Pointerwert.

Eine Stopfaktion wird z.B. in einer TU-Transporteinheit TU-2, TU-12 und TU-11 frühestens mit dem V3-Pointerbyte durchgeführt. Soll eine Stopfaktion vorgenommen werden, verschiebt sich der Anfang der TU-Transporteinheit um ein Datenbyte. Das bedeutet, daß der TU-Pointerwert um eine Einheit dekrementiert oder inkrementiert wird. Wenn nach Auswertung der V1- und der V2-Pointerbytes der TU-Transporteinheiten TU-2, TU-12 oder TU-11 der Pointerwert auf den Anfang des entsprechenden Containers weist, der zwischen dem V2- und V3-Pointerbyte liegt, tritt vor der eigentlichen Stopfstelle eine Verschiebung auf. Dasselbe gilt für die Verwaltungseinheiten AU-4 und AU-3. Um eine Verschiebung vor der eigentlichen Stopfstelle zu verhindern, ist die Pointerschaltung bei Auftreten einer positiven oder negativen Stopfaktion erst nach Auftreten des H3- oder V3-Pointerbytes einer Transporteinheit zur Inkrementierung oder Dekrementierung der Pointerwerte vorgesehen.

Damit die Zähler der Zähleranordnung einen gemeinsamen Bezugspunkt zum Rahmen des empfangenen Signals der synchronen digitalen Hierachie haben, ist die Initialisierung der Zähler der Zähleranordnung jeweils zu Beginn einer AU-4- oder AU-3-Verwaltungseinheit vorgesehen.

Aus der deutschen Patentanmeldung P 42 05 959 ist eine Schaltungsanordnung zum Ausgleich von Frequenz- und/oder Phasenschwankungen zwischen einem ankommenden und einem abgehenden AU-Nutzdatenbyte und anderen Datenbytes enthaltenen Signal bekannt. Die Schaltungsanordnung enthält einen Vorpuffer zur Zwischenspeicherung der Nutzdatenbytes und einer AU-Pointer-Kennung, die den Anfang eines AU-Pointers kennzeichnet, und eine Steuerschaltung, die bei einer Stopfung ein Sperrsignal ausgibt. Eine Stopfung tritt bei Frequenz- und/oder Phasenschwankungen und bei den SOH-Daten des STM-1-Rahmens auf. Wenn also keine Nutzdatenbytes vom Vorpuffer ausgelesen werden, liegt das Sperrsignal vor.

In der Steueranordnung der erfindungsgemäßen Schaltungsanordnung für die Auswertung von Pointerbytes des empfangenen STM-1-Signals erhält die Steueranordnung ein Sperrsignal bei Nichtvorliegen von AU-Nutzdatenbytes und ist bei Auftreten eines Sperrsignals zur Angabe eines Zeigers für das Nichtvorliegen von Nutzdatenbytes vorgesehen. Das Sperrsignal wird beispielsweise von dem aus der deutschen Patentanmeldung P 42 05 959 bekannten Vorpuffer geliefert. Der Zeiger gibt also an, ob AU-Nutzdatenbytes vorliegen. Weiterhin ist ein Positionszähler zur Zählung der AU-Nutzdatenbytes vorhanden, der bei Vorliegen des Sperrsignals die Zählung unterbricht. Dieser Positionszähler wird zur Ermittlung der AU-Pointerbytes benötigt.

Bei Übereinstimmung des jeweiligen aktuellen Pointerwertes mit dem Inhalt des entsprechenden Positionszählers ist die Steueranordnung zur Ausgabe jeweils eines Zeigers für den Anfang einer AU-4, AU-3, TU-3, TU-2, TU-12 oder TU-11 vorgesehen. Ist beispielsweise der Zählerinhalt des AU-Positionszählers gleich dem Pointerwert der entsprechenden Verwaltungseinheit AU-3 oder AU-4 wird ein Zeiger ausgegeben, der in einem zur Pufferung der Nutzdatenbytes des STM-1-Signals dienenden Pufferspeicher zwischengespeichert werden kann und zur Zuordnung der zeitlichen Reihenfolge bei der Auslesung der Nutzdatenbytes verwendet wird.

Um herauszufinden, wann AU-Pointer auftreten, ist ein AU-Pointer-Zähler in der Steueranordnung enthalten. Die Steueranordnung erhält eine AU-Pointer-Kennung zur Kennzeichnung des Anfangs der AU-Pointer. Diese AU-Pointer-Kennung initialisiert den AU-Pointer-Zähler zur Zählung der AU-Pointer-Bytes. Die AU-Pointer-Kennung kann von dem aus der deutschen Patentanmeldung P 42 05 959 bekannten Vorpuffer geliefert werden.

Die Schaltungsanordnung des synchronen Übertragungssystems, die ein zu sendendes Signal bildet, bekommt von einem zur Pufferung von Nutzdatenbytes dienenden Pufferspeicher einen Zeiger für den Anfang einer AU-4, AU-3, TU-3, TU-2, TU-12 oder TU-11 geliefert. Bei Lieferung eines Zeigers für den Anfang einer AU-4, AU-3, TU-3, TU-2, TU-12 oder TU-11 ist die Pointerschaltung dann zur Bildung des aktuellen Pointerwertes aus dem Zählerinhalt des entsprechenden Positionszählers vorgesehen. Soll positiv oder negativ gestopft werden, so inkrementiert oder dekrementiert die Pointerschaltung den aktuellen Pointerwert.

Für das zu sendende Signal der synchronen digitalen Hierachie ist eine Steueranordnung erforderlich, die noch eine Sende-Rahmenzähleranordnung mit einem Spaltenzähler zur Bestimmung der Spalte und einem Zeilenzähler zur Bestimmung der Zeile in dem rahmensynchronisierten Signal der synchronen digitalen Hierachie (STM-1-Signal) enthält. Der Spaltenzähler und der Zeilenzähler sind für die Initialisierung der Zähler der Zähleranordnung erforderlich (Erzeugung eines gemeinsamen Bezugspunktes). Die Zähler der Zähleranordnung werden jeweils zu Beginn der 9. Spalte und der 4. Zeile im STM-1-Rahmen initialisiert. Des weiteren dient der Spalten- und Zeilenzähler in der Sende-Rahmenzähleranordnung zur Bestimmung von Pointerkennzeichnungen für die AU-Pointerbytes.

Ausführungsbeispiele der Erfindung werden nachstehend anhand der Figuren näher erläutert. Es zeigen:

Fig. 1  eine schematische Darstellung des STM-1-Rahmens mit einem VC-4-Container,

Fig. 2  eine Multiplexstruktur des STM-1-Signales,

Fig. 3  das Multiplexschema von "Tributary Units" TU-11 bzw. TU-12 in eine "Tributary Unit-Group" TUG-2,

Fig. 4  das Multiplexschema von "Tributary Unit-Groups" TUG-2 in einen virtuellen Container VC-3,

Fig. 5  das Multiplexschema von "Tributary Unit-Groups" TUG-2 in eine "Tributary Unit-Group" TUG-3,

Fig. 6  das Multiplexschema von "Tributary Unit-Groups" TUG-3 in einen virtuellen Container VC-4,

Fig. 7  das Multiplexschema von Verwaltungseinheiten AU-3 in eine Verwaltungseinheitsgruppe AUG,

Fig. 8  eine schematisch dargestellte Verwaltungseinheit AU-4 mit Pointerstellen für "Tributary Units" TU-3,

Fig. 9  eine schematische Darstellung eines Vielfachrahmens mit Pointerstellen für die virtuellen Container VC-11, VC-12 und VC-2,

Fig. 10 ein Ausführungsbeispiel für ein synchrones Übertragungssystem,

Fig. 11 ein erstes Ausführungsbeispiel einer erfindungsgemäßen Schaltungsanordnung,

Fig. 12 ein Blockschaltbild einer in der Schaltungsanordnung nach Fig. 10 enthaltenen Schreibschaltung,

Fig. 13 ein Blockschaltbild einer in der Schaltungsanordnung nach Fig. 10 enthaltenen Empfangs-Pointerschaltung,

Fig. 14 ein zweites Ausführungsbeispiel einer erfindungsgemäßen Schaltungsanordnung und

Fig. 15 ein Blockschaltbild einer in der Schaltungsanordnung nach Fig. 13 enthaltenen Leseschaltung.

Übertragungssysteme, die Signale der synchronen digitalen Hierachie übertragen, weisen Regeneratorschaltungen auf, in denen Anpassungsschaltungen Frequenz- und Phasenschwankungen zwischen einem ankommenden und einem abgehenden Signal ausgleichen. Mit einem solchen Übertagungssystem wird beispielsweise ein STM-1-Signal übertragen. Dieses STM-1-Signal ist nach Rahmen strukturiert und in der CCITT-Empfehlung G 709 näher erläutert. Im folgenden sollen die für die Erfindung wesentlichen Teile des STM-1-Rahmenaufbaues erläutert werden.

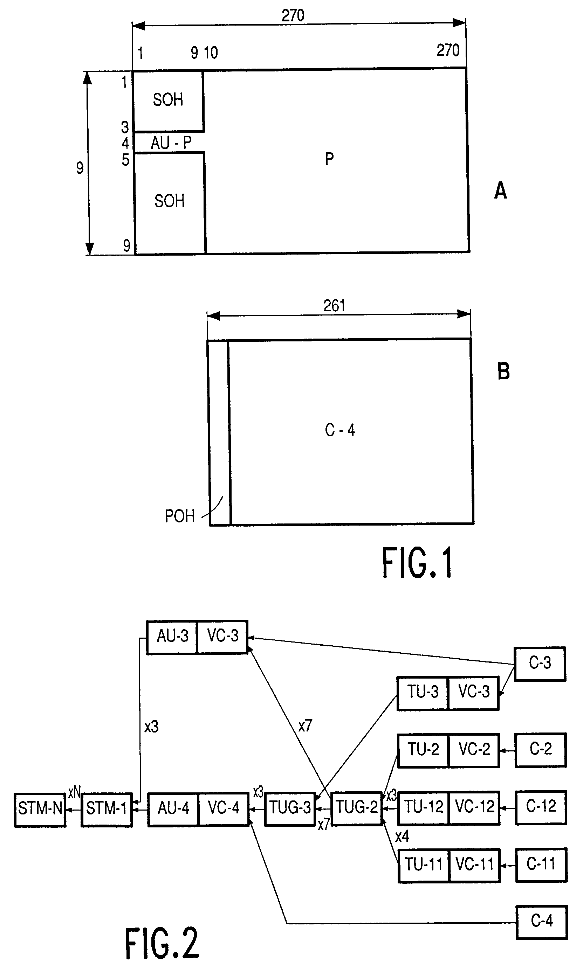

Die Struktur eines STM-1-Rahmens ist in Fig. 1a schematisch dargestellt. Der Rahmen besteht aus 270 Spalten und 9 Zeilen (pro Zeile 270 Bytes). In den Zeilen 1 bis 3 und 5 bis 9, jeweils in den Spalten 1 bis 9 ist der sogenannte "Section Overhead" (SOH) für Steuerungs- und Fehlererkennungsinformationen, in der 4. Zeile von Spalte 1 bis 9 ist der AU-Pointer (AU-P) untergebracht, und in den restlichen Spalten und Zeilen die eigentliche Nutzinformation, die "AU-Payload" oder der AU-Nutzdatenbereich (P) eingefügt. Wie Fig. 1b zeigt, ist in dem Nutzdatenbereich beispielsweise ein virtueller Container VC-4 untergebracht, der aus einem C-4-Nutzdatenbereich und einem Steuerungsbereich POH ("Path Overhead") besteht. Unter einem Container wird hierbei die Grundverpackungseinheit für Nutzdatenbytes verstanden. In einem solchen Container können noch weitere Container untergebracht werden.

Eine Multiplexbildung für den STM-1-Rahmen ist in Fig. 2 gezeigt. In einen Container C-3 werden Daten eines Nutzsignals mit einer Bitrate von 44,736 Mbit/s hineingebracht. Durch Hinzufügung eines POH wird aus dem Container C-3 ein virtueller Container VC-3. Durch Hinzufügung von Pointerbytes, Stopfbytes und weiteren Bytes wird aus dem virtuellen Container VC-3 eine "Tributary Unit" TU-3 oder eine Verwaltungseinheit ("Administration Unit") AU-3. Drei Verwaltungseinheiten AU-3 werden in einen STM-1-Rahmen eingefügt.

In einen Container C-2 werden Daten eines Nutzsignals mit einer Bitrate von 6,312 Mbit/s, in einen Container C-12 werden Daten eines Nutzsignals mit einer Bitrate von 2,048 Mbit/s und in einen Container C-11 werden Daten eines Nutzsignals mit einer Bitrate von 1,44 Mbit/s eingefügt. Aus den Containern C-2, C-12 und C-11 werden virtuelle Container VC-2, VC-12 und VC-11, indem jeweils ein POH dazugesetzt wird. Nachdem die virtuellen Container VC-2, VC-12 und VC-11 durch Stopfbytes und weitere Bytes ergänzt worden sind, ergeben sich "Tributary Units" TU-2, TU-12 und TU-11. Die TU-2, TU-12 und TU-11 werden in einer "Tributary Unit-Group" TUG-2 zusammengefaßt. In eine TUG-2 wird eine TU-2 oder drei TU-12 oder vier TU-11 eingesetzt.

In einen VC-3 können sieben TUG-2 oder in eine TUG-3 sieben TUG-2 eingefügt werden. Im ersten Fall wird dabei noch ein POH und im zweiten Fall weitere Bytes und Stopfbytes hinzugefügt. Drei TUG-3 werden in einen VC-4 eingepaßt, der zusätzlich noch ein POH, weitere Bytes und Stopfbytes enthält. Ebenfalls kann in den VC-4 - wie oben schon erläutert - ein Container C-4 eingefügt werden. Der VC-4 wird in eine AU-4 (auch als Verwaltungseinheitsgruppe AUG bezeichnet) eingefügt, die gegenüber dem virtuellen Container VC-4 einen AU-Pointer enthält. Diese AU-4 bildet dann zusammen mit dem SOH den STM-1-Rahmen. Durch Vervielfachung des STM-1-Rahmens ergeben sich höhere STM-Rahmen (STM-N).

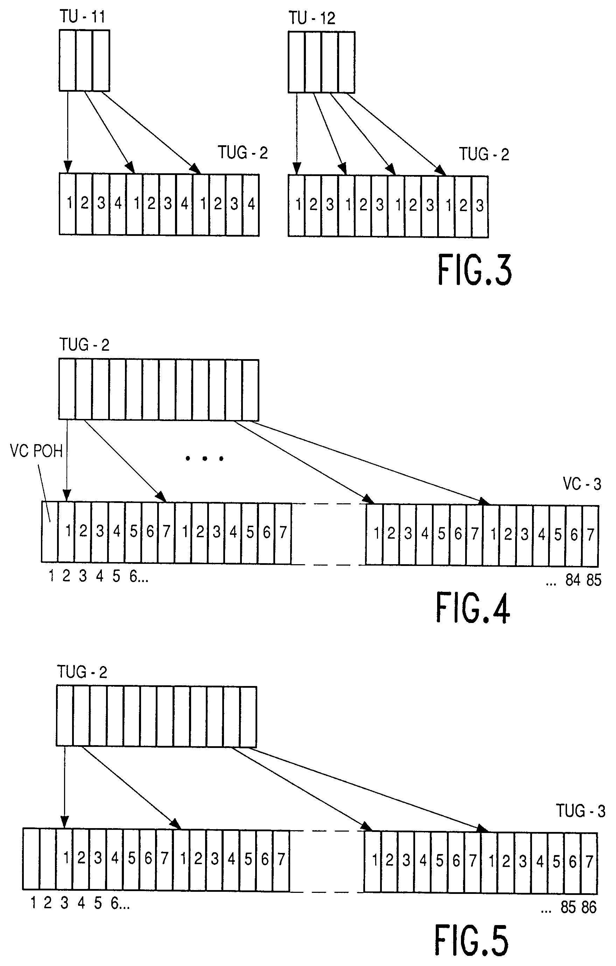

Aus Fig. 3 wird die Multiplexbildung von vier TU-11 bzw. drei TU-12 in eine TUG-2 deutlich. Die Bytes einer Spalte einer TU-11 beziehungsweise TU-12 werden abwechselnd in eine TUG-2 eingefügt.

Fig. 4 zeigt das Multiplexschema für die Einfügung von sieben TUG-2 in einen VC-3. Die erste Spalte des VC-3 ist mit einer POH belegt. In die folgenden Spalten werden abwechselnd die Bytes einer Spalte einer TUG-2 in den VC-3 eingefügt. Ein ähnliches Multiplexschema ist in der Fig. 5 für die Multiplexbildung von sieben TUG-2 in eine TUG-3 gezeigt. Hierbei sind jedoch die ersten beiden Spalten unter anderem für feste Stopfstellen vorgesehen.

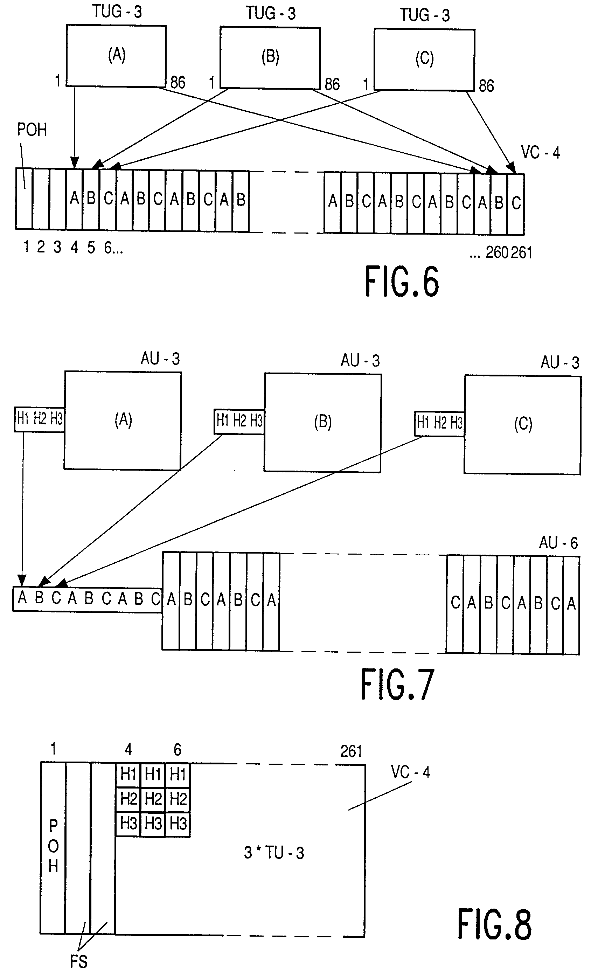

Die Multiplexbildung von drei TUG-3 in einen VC-4 ist in Fig. 6 dargestellt. In den ersten drei Spalten des VC-4 ist ein POH und feste Stopfstellen vorgesehen. Die restlichen Spalten des VC-4 sind abwechselnd mit Spalten der jeweiligen TUG-3 belegt.

Die Verschachtelung von drei AU-3 mit dem zugehörigen AU-Pointer ist in der Fig. 7 gezeigt. Die AU-Pointer jeder AU-3 sind abwechselnd in dem AU-Pointer des STM-1-Rahmens abgelegt. Die Bytes jeder Spalte einer AU-3 sind ebenfalls abwechselnd in einer AUG abgelegt.

Jede AU-3 und AU-4 und jede TU-3, TU-2, TU-12 und TU-11 besitzen Pointer. Die Pointer werden an fest vorgegebenen Stellen eingefügt. Sie weisen auf den Anfang des zugehörigen virtuellen Containers hin und können Stopfdaten enthalten. Die Lage der Pointer für die AU-4 und AU-3 ist aus den Fig. 1 und 7 ersichtlich. Die Lage der Pointer für die TU-3 ergibt sich aus der Fig. 8. Die Pointer H1, H2 und H3 sind für jede der drei TU-3 einem VC-4 in den Spalten 4 bis 6 des VC-4, Zeilen 1 bis 3 untergebracht. In der 1. Spalte des VC-4 ist ein POH und in der 2. und 3. Spalte des VC-4 sind feste Stopfstellen FS vorhanden, wenn in einem VC-4 drei TU-3 eingefügt sind.

Eine TU-2, TU-12 oder TU-11 wird in vier aufeinanderfolgenden STM-1-Rahmen übertragen. Im ersten Rahmen einer "Tributary Unit" ist an der ersten Byteposition der Pointer V1, im zweiten Rahmen an der ersten Byteposition der Pointer V2, im dritten Rahmen an der ersten Byteposition der Pointer V3 und im vierten Rahmen an der ersten Byteposition der Pointer V4 vorhanden. Im dritten Rahmen kann an der zweiten Byteposition eine positive Stopfstelle sein. Pro Rahmen sind sonst 26 Bytes eines virtuellen Containers VC-11, 35 Bytes eines virtuellen Containers VC-12 und 107 Bytes eines virtuellen Containers VC-2 zu übertragen.

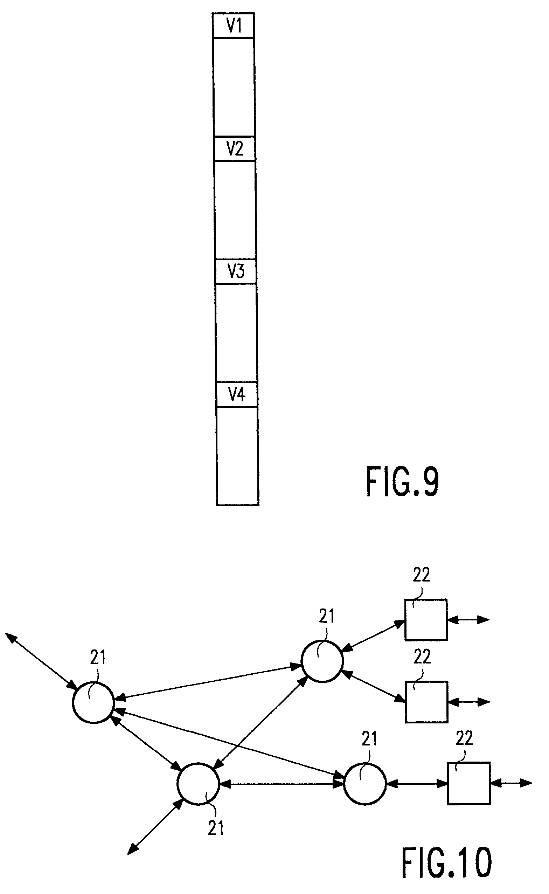

Ein Ausführungsbeispiel für ein synchrones Übertragungssystem, beispielsweise ein System der synchronen digitalen Hierachie (SDH) oder eines synchronen optischen Netzwerkes (SONET), ist in Fig. 10 dargestellt. Dieses enthält mehrere Übertragungsvorrichtungen 21, die teilweise über Verbindungen miteinander gekoppelt sind. Eine solche Übertragungsvorrichtung 21 empfängt und sendet beispielsweise mindestens ein STM-1-Signal. Des weiteren kann die Übertragungsvorrichtung 21 Signale von Schnittstellenschaltungen 22 empfangen oder an diese senden. Eine solche Schnittstellenschaltung 22 empfängt auch Signale von Transporteinheiten eines STM-1-Signals. In der Schnittstellenschaltung 22 wird dieses beispielsweise zur Taktanpassung in einen Pufferspeicher einer Anpassungsschaltung eingelesen.

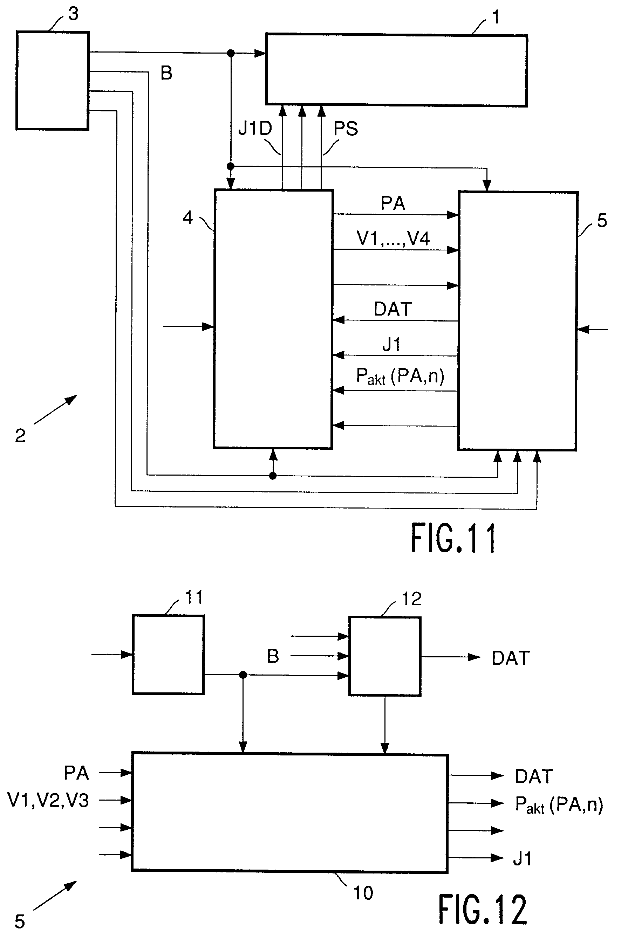

Ein erstes Ausführungsbeispiel einer Schaltungsanordnung des synchronen Übertragungssystems nach Fig. 10, die Bestandteil einer Anpassungsschaltung ist und STM-1-Signale verarbeitet, ist schematisch in der Fig. 11 dargestellt. Ein Pufferspeicher 1 wird von einer Empfangs-Steueranordnung 2 gesteuert und erhält von dieser einen Schreibbefehl, einen Zeigerwert J1D und eine Pufferspeicheradresse PS. Die Empfangs-Steueranordnung 2 ist noch mit einer Schaltungsanordnung 3 (im folgenden als Vorpufferschaltung bezeichnet) zum Ausgleich von Frequenz- und/oder Phasenschwankungen zwischen einem ankommenden und einem abgehenden Signal gekoppelt. Diese Vorpufferschaltung 3 ist aus der deutschen Patentanmeldung P 42 05 959 bekannt. Sie liefert Datenbytes an den Pufferspeicher 1 und an die Empfangs-Steueranordnung 2. Ferner liefert sie ein Sperrsignal an die Empfangs-Steueranordnung 2, wenn keine Datenbytes aus der Vorpufferschaltung 3 ausgelesen werden. Die Empfangs-Steueranordnung 2 erhält von der Vorpufferschaltung 3 noch eine AU-Pointer-Kennung, die den Anfang des AU-Pointers kennzeichnet und eine Bereichskennung B. Jede AU-3 und jeder dazugehörige AU-Pointer sind abwechselnd in den STM-1-Rahmen eingesetzt. Es sind folglich drei Bereiche vorhanden, die abwechselnd im STM-1-Rahmen auftauchen. Zur Kennzeichnung eines Bereiches liefert die Vorpufferschaltung 3 die Bereichskennung B, die auch in der Empfangs-Steueranordnung 2 für die Auswertung des Nutzdatenbereichs benutzt wird. Die Information, welche Container in dem STM-1-Signal transportiert werden, liefert ein Managementspeicher des Systemmanagements, der hier nicht näher dargestellt ist.

Die Empfangs-Steueranordnung 2 enthält eine Schreibschaltung 4 und eine Empfangs-Pointerschaltung 5, die ebenfalls Datenbytes von der Vorpufferschaltung 3 erhalten. Die Empfangs-Pointerschaltung 5 liefert die Information, ob AU-Nutzdatenbytes vorliegen. In diesem Fall ist der Zeiger DAT gleich 1 gesetzt. Ferner führt sie der Schreibschaltung 4 eine J1-Kennzeichnung zu, die kennzeichnet, ob das in den Pufferspeicher 1 einzuschreibende Nutzdatenbyte der Anfang eines VC-4 oder eines VC-3 in einer AU-3 ist. Die Schreibschaltung 4 erhält noch von der Empfangs-Pointerschaltung 5 den Pointerwert $P_{akt}(B, n)$ zu jedem gelieferten Container und die Angabe, ob eine positive oder negative Stopfaktion vorliegt. Die Empfangs-Pointerschaltung 5 enthält einen Pointerspeicher, in dem Pointerinformationen von vorhergehenden STM-1-Rahmen abgespeichert sind. Die zu jedem gelieferten Container gehörige Pointeradresse PA liefert die Schreibschaltung 4 an die Empfangs-Pointerschaltung 5. Außerdem gibt sie Pointerkennzeichnungen V1,...,V4 an die Empfangs-Pointerschaltung 5 aus, die jeweils kennzeichnet, daß hier eine mögliche Stopfstelle und Pointerbytes liegen können. Letztlich liefert sie noch eine TU-Kennung an die Empfangs-Pointerschaltung 5, die angibt, zu welcher "Tributary Unit" das von der Vorpufferschaltung 3 gelieferte Datenbyte gehört.

Es sei noch erwähnt, daß aus Gründen der Übersichtlichkeit in der Fig. 11 und den folgenden Fig. Taktsignalverbindungen nicht aufgeführt und beschrieben sind.

In Fig. 12 ist ein Blockschaltbild der Schreibschaltung 4 dargestellt. Diese enthält eine Empfangs-Zähleranordnung 6, eine Empfangs-Adressierungsanordnung 7, eine H4-Anordnung 8 und eine Schreibentscheidungsanordnung 9. Die Empfangs-Zähleranordnung 6 enthält drei einem Bereich zugeordnete Zählerstufen. Jede Zählerstufe enthält einen Spaltenzähler AUS(B) zur Zählung der Spalten in einer AU-3 bzw. AU-4, einem Zeilenzähler zur Zählung der Zeilen in einer AU-3 bzw. AU-4. Pro Bereich ist jeweils ein Zähler TUG2(B), ein Zähler TU11(B) und ein Zähler TU12(B) vorhanden. Der Zähler TUG2(B) ermittelt, zu welcher TUG-2 das anliegende Datenbyte zuzuordnen ist, wenn eine TUG-2 in dem Bereich transportiert wird. Der Zähler TU12(B) ermittelt für einen Bereich, zu welcher TU-12 das Datenbyte zuzuordnen ist, wenn in den TUG-2 mehrere TU-12 eingefügt sind. Das gleiche wird für eine TUG-2 für einen Bereich für eine TU-11 mit dem Zähler TU11(B) durchgeführt.

Ferner sind noch vier Posititionszähler TU3POS(B), TU2POS(B), TU12POS(B) und TU11POS(B) vorhanden, die jeweils die Position eines Nutzdatenbytes in der zugehörigen TU-3, TU-2, TU-12 und TU-11 feststellen, wenn eine solche Transporteinheit benutzt wird. Anhand der verschiedenen Zählerstände setzt die Empfangs-Zähleranordnung 6 verschiedene Pointerzeiger (H1TU3(B), H2TU3(B), H3TU3(B) und H3TU3P(B) für eine TU3; VTU2(B), VTU2P(B) für eine TU-2; VTU11(B) und VTU11P(B) für eine TU-11; VTU12(B) und VTU12P(B) für eine TU12), die kennzeichnen, daß das anliegende Datenbyte möglicherweise ein Pointerbyte oder eine Stopfstelle ist.

Die Positionszählerstände werden an die Empfangs-Adressierungsanordnung 7 geliefert. Der Zählerstand des Spaltenzählers AUS(B) wird an die H4-Anordnung 8 und an die Schreibentscheidungsanordnung 9 und der Zählerstand des Zeilenzählers AUZ(B) an die H4-Anordnung 8 geliefert. Des weiteren erhält die Empfangs-Zähleranordnung 6 noch Datenbytes und die Bereichskennung B von der Vorpufferschaltung 3 und von der Empfangs-Pointerschaltung 5 den Zeiger DAT und die J1-Kennzeichnung geliefert. Sie erzeugt zwei TU-Zeiger TU3D(B) und TUG2D(B) für jeden Bereich, die kennzeichnen, wann eine TU-3 oder eine TUG-2 vorliegen. Des weiteren weist die Empfangs-Zähleranordnung 6, ebenso wie die Empfangs-Adressierungsanordnung 7, die H4-Anordnung 8 und die Schreibentscheidungsanordnung 9 noch eine Verbindung zum Managementspeicher des Systemmanagements auf.

Die H4-Anordnung 8 ermittelt, zu welchem der vier Rahmen das gelieferte Datenbyte gehört. Hierzu wird der H4-Anordnung 8 noch die Bereichskennung B und die Datenbytes von der Vorpufferschaltung 3 und der Zeiger DAT von der Empfangs-Pointerschaltung 5 geliefert. Die H4-Anordnung 8 liefert den Wert $H4_{akt}(B,n)$ an die Empfangs-Adressierungsanordnung 7.

In der Empfangs-Adressierungsanordnung 7 wird die TU-Kennung, die Pointeradresse PA, die Pufferspeicheradresse PS, eine Pointerkennzeichnung V1, V2, V3, V3P und V4 und ein Positionszeiger TUPOS gebildet. Der Positionszeiger TUPOS liefert den Wert eines der Positionszähler TU3POS(B), TU2POS(B), TU12POS(B) oder TU11POS(B). Die Pointerkennzeichnung V1 bis V4 kennzeichnet, welches Pointerbyte vorliegt und ob eine positive Stopfstelle vorhanden ist.

Die Schreibentscheidungsanordnung 9, welche die Bereichskennung B von der Vorpufferschaltung 3 und die J1-Kennzeichnung, den Zeiger DAT, den Pointerwert und eine Mitteilung, ob eine Stopfaktion vorliegt, von der Empfangs-Pointerschaltung 5 empfängt, erzeugt einen Schreibbefehl und den Zeiger J1D. Zur Bildung der Pufferspeicheradresse PS wird von der Schreibentscheidungsanordnung 9 an die Empfangs-Adressierungsanordnung 7 noch der Zählerstand von einem Schreibzähler geliefert. Es sind für einen VC-4 ein Schreibzähler VC4SC, für jeweils einen VC-3 ein Schreibzähler VC3SC(B) und für maximal 84 niederbitratige Container jeweils ein Schreibzähler LOSC(PA) vorhanden. Es können nämlich in einer AU-4 bzw. in drei AU-3 insgesamt 84 C-11 transportiert werden.

Die oben genannten Anordnungen 6 bis 9 können Teile einer anwendungsspezifischen integrierten Schaltung (ASIC) oder Prozessorelemente sein, die mittels spezieller Entwurfssprachen an einem Rechner entworfen werden (vgl. z.B. "ASIC- Entwurf mit VHDL und Logiksynthese" von D. Peer, Elekronik 23, 1991, Seiten 84 bis 92). Die Funktion solcher Schaltungselemente läßt sich daher einfacher über Zustands- oder Programmabläufe erläutern.

Im folgenden werden die Zustandsabläufe für Anordnungen in der Schreibschaltung 4 beschrieben, die im Anhang A aufgeführt sind. Zuerst wird in der Empfangs-Zähleranordnung 6 der Schreibschaltung 4 ermittelt, wo das jeweilige von der Vorpufferschaltung 3 gelieferte Datenbyte im STM-1-Rahmen einzuordnen ist. In eine Verwaltungseinheit AUG werden drei AU-3 von Spalte zu Spalte abwechselnd eingefügt. Die Bytes von drei aufeinanderfolgenden Spalten gehören also zu jeweils unterschiedlichen AU-3. Jede AU-3 ist einem Bereich zugeordnet. Eine AU-4 geht vollständig in einer AUG auf. Diese ist auch in drei Bereiche unterteilt. Jede dritte Spalte ist jeweils dem gleichen Bereich zugeordnet. Die Spalten 0, 3, 6 usw. gehören zum Bereich 0, die Spalten 1, 4, 7 usw. gehören zum Bereich 1 und die Spalten 2, 5, 8 usw. gehören zum Bereich 2.

In der Empfangs-Zähleranordnung 6 wird nach dem Start zuerst überprüft, ob der von der Empfangs-Pointerschaltung 5 gelieferte Zeiger DAT gleich 1 ist, also ob gültige Daten anliegen. Liegen keine gültigen Daten an, wird zum Start zurückgesprungen. Im anderen Fall wird überprüft, ob die ebenfalls von der Empfangs-Pointerschaltung 5 gelieferte J1-Kennzeichnung vorliegt. Die J1-Kennzeichnung gibt den Beginn eines VC-4 in einer AU-4 oder eines VC-3 in einer AU-3 an. Ist die J1-Kennzeichnung vorhanden, wird als nächstes überprüft, ob eine AU-4 geliefert wird. Diese Information kann beispielsweise von dem Managementspeicher zugeführt werden. Liegt eine AU-4 vor, so wird jeweils für jeden der drei Bereiche eine Initialisierung in der Initialisierungsroutine (Anhang A) durchgeführt (Die J1-Kennzeichnung liegt nur für den ersten Bereich vor.). Zuerst wird also der Bereich B gleich 0 gesetzt und dann zur Initialisierungsroutine gesprungen. Anschließend wird dasselbe für die beiden anderen Bereiche durchgeführt. Liegt keine AU-4 sondern eine AU-3 vor wird ebenfalls zur Initialisierungsroutine gesprungen. Dann wird eine Initialisierung für den aktuellen Bereich durchgeführt.

Falls keine J1-Kennzeichnung vorliegt, wird durch Abfrage des Managementspeichers geprüft, ob eine AU-4 geliefert wird. Ist dies erfüllt, wird zur Zählerroutine 1 (Anhang A) gesprungen. Falls eine AU-3 vorliegt, wird zur Zählerroutine 2 (Anhang A) gesprungen.

Im folgenden wird die Initialisierungsroutine erläutert. Nach dem Start werden der Spaltenzähler AUS-(B), der Zeilenzähler AUZ(B), die Zähler TUG2(B), TU11(B), TU12(B) und der Positionszähler TU3POS(B) für den jeweiligen Bereich initialisiert. Der Spaltenzähler AUS(B) und der Zeilenzähler AUZ(B) werden mit dem Wert 0 belegt. Der Zählerstand des Zählers TUG2(B), der eine von sieben TUG-2 kennzeichnet, wird gleich 6 gesetzt. Der Zählerstand des Zählers TU11(B), der eine von vier TU-11 kennzeichnet, wird mit dem Wert 3 belegt. Der Zählerstand des Zählers TU12(B), der eine von drei TU-12 kennzeichnet wird gleich 2 gesetzt. Der Zählerstand des Positionszählers TU3POS(B), der ein Datenbyte einer TU-3 kennzeichnet, erhält den Wert 594. In einer TU-3 sind 765 Datenbytes enthalten (vergleiche Fig. 3.8/ G709). Der Wert 594 bezieht sich auf das Ende einer TU-3 in einer VC-4. Der Positionszähler TU3POS(B) beinhaltet ebenso wie alle genannten und zu nennenden Zähler als Zählerwert den Zählerstand 0.

Die drei weiteren Positionszähler TU2POS(B), TU12POS(B) und TU11POS(B), die jeweils die Position eines Datenbytes in einer TU-2, einer TU-12 oder einer TU-11 festlegen, werden nur dann initialisiert, wenn der erste von 4 Rahmen vorliegt. Hierüber gibt der Zeiger $H4_{akt}(B,n)$ Auskunft, der von der H4-Anordnung 8 zugeführt wird. Falls der Zeiger $H4_{akt}(B,n)$ gleich 0 ist, liegt der erste Rahmen vor und der Zählerstand des Positionszählers TU2POS(B) wird mit dem Wert 320 belegt (428 Bytes pro Container TU-2; Byte 320 kennzeichnet das Ende einer TU-2; vergleiche Fig. 3.11/G709), der Zählerstand des Positionszählers TU12POS(B) mit dem Wert 104 (140 Bytes pro Container TU-12; Byte 104 kennzeichnet das Ende einer TU-12; vergleiche Fig. 3.11/G709) und der Zählerstand des Positionszählers TU11POS(B) mit dem Wert 77 (104 Bytes pro Container TU-11; Byte 77 kennzeichnet das Ende einer TU-11; vergleiche Fig. 3.11/G709). Falls ein anderer Rahmen vorliegt (Zeiger $H4_{akt}(B,n){\neq}0$), wird zum Ende gesprungen.

Als nächstes wird die Zählerroutine 1 beschrieben, die bei Vorliegen einer AU-4 angesprungen wird. Nach dem Start wird überprüft, ob der Zählerstand des Spaltenzählers AUS(B) gleich 86 ist, also das letzte Datenbyte am Ende einer Zeile zu verarbeiten ist (87 Spalten pro Bereich). Wird dies bejaht, wird der Zählerstand des Spaltenzählers AUS(B) gleich 0 gesetzt. Dann wird der Zählerstand des Zeilenzähler AUZ-(B) um eine Einheit erhöht. Wenn der Zählerstand gleich 9 ist, wird dieser auf den Wert 0 gesetzt. Der Zeilenzähler kennzeichnet in diesem Fall wieder die erste Zeile einem VC-4. Ist der Zählerstand des Spaltenzählers AUS(B) nicht gleich 86 wird er um eine Einheit erhöht.

In einem VC-4 können drei TUG-3 entweder mit jeweils einer TU-3 oder jeweils sieben TUG-2 transportiert werden. Für jede mögliche Kombination wird im folgenden die Position des Datenbytes im VC-4 bestimmt. Zuerst wird diese in einem TU-3 bestimmt. Hierbei wird geprüft, ob der Zählerstand des Spaltenzählers AUS(B) größer als 1 ist. Ist das nicht der Fall, wird der TU-Zeiger TU3D(B) gleich 0 gesetzt. Das bedeutet, daß keine TU-3-Daten vorliegen. Daten einer TU-3 liegen nämlich erst in der dritten Spalte jedes Bereiches vor (vergleiche Fig. 2.4 und 2.5/G709). In dem anderen Fall wird der TU-Zeiger TU3D(B) gleich 1 gesetzt und dann der Zählerstand des Positionszählers TU3POS(B) um eine Einheit erhöht. Beim Zählerstand 765 beginnt der Positionszähler TU3POS(B) wieder bei 0 zu zählen (765 Bytes pro TU-3).

Des weiteren wird überprüft, ob ein Pointerbyte oder eine positive oder negative Stopfmöglichkeit vorliegt. Zuerst wird gefragt, ob der Zählerstand des Spaltenzählers AUS(B) gleich 1 ist. Wird dies verneint, werden die drei Pointerzeiger H1TU3(B), H2TU3(B) und H3TU3(B) gleich 0 gesetzt.

Dann wird gefragt, ob der Zählerstand des Spaltenzählers AUS(B) gleich 2 und der Zählerstand des Zeilenzählers AUZ(B) gleich 2 ist. Wird dies verneint, wird der Pointerzeiger H3TU3P(B) gleich 0 gesetzt. Im anderen Fall wird der Pointerzeiger H3TU3P(B) gleich 1 gesetzt. Dieser gibt an, daß eine positive Stopfmöglichkeit vorliegt. Wenn der Zählerstand des Spaltenzählers AUS(B) gleich 1 ist, wird gefragt, ob der Zählerstand des Zeilenzählers AUZ(B) geich 0 ist. Wird dies bejaht, liegt die erste Zeile vor und der Pointerzeiger H1TU3(B) wird gleich 1 gesetzt. Ist der Zählerstand des Zeilenzählers AUS(B) ungleich 0, wird als nächstes geprüft, ob der Zählerstand des Zeilenzählers AUZ(B) gleich 1 ist. Stimmt dies, wird der Pointerzeiger H2TU3(B) gleich 1 gesetzt. Ist dies nicht der Fall, wird zuletzt überprüft, ob der Zählerstand des Zeilenzählers AUZ(B) gleich 2 ist. Liegt das Datenbyte in der dritten Zeile, so wird ein Pointerzeiger H3TU3(B) gleich 1 gesetzt. Die Pointerzeiger H1TU3(B), H2TU3(B) und H3TU3(B) geben an, wenn sie gleich 1 gesetzt sind, daß die Pointerstellen H1 und H2 und eine negative Stopfmöglichkeit (H3) vorliegen.

Als nächstes wird die Position des Datenbytes bestimmt, wenn TU-2 vorliegt. Zuerst wird hierbei überprüft, ob der Zählerstand des Spaltenzählers AUS(B) größer 2 ist. Wird dies verneint, wird der TU-Zeiger TUG2D(B) gleich 0 gesetzt, d.h. es liegen keine Daten einer TUG-2 und damit einer TU-2 vor. Im anderen Fall wird der TU-Zeiger TUG2D(B) gleich 1 gesetzt (vgl. Fig. 2.4 und 2.7/G709). Dann wird geprüft, welche TUG-2 vorliegt. Hierbei wird gefragt, ob der Zählerstand des Zählers TUG2(B) gleich 6 ist. Ist dies nicht der Fall, wird der Zählerstand des Zählers TUG2(B) um eine Einheit erhöht, im anderen Fall gleich 0 gesetzt und gefragt, ob der Zählerstand des Spaltenzählers AUS(B) kleiner 10 und der Zählerstand des Zeilenzählers AUZ(B) gleich 0 ist. Diese Abfrage und die folgenden Instruktionen bzw. Abfragen werden nur für die erste TUG-2 durchgeführt. Bei den sechs anderen TUG-2 ergäben sich die gleichen Ergebnisse. Wird die letzte Abfrage bejaht, liegt der Teil einer TUG-2 vor, der TU-2-Pointer enthält. In diesem Fall wird der Pointerzeiger VTU2(B) gleich 1 und im anderen Fall gleich 0 gesetzt. Ist der Pointerzeiger VTU2 (B) gleich 0, liegt das Datenbyte nicht im dem Teil des TUG-2, wo Pointer von TU-2 auftreten. Nachdem der Pointerzeiger VTU2(B) gleich 0 gesetzt ist, wird der Zählerstand des Positionszählers TU2POS(B) um eine Einheit erhöht. Beim Zählerstand 428 beginnt der Positionszähler TU2POS(B) wieder bei 0 zu zählen. Eine TU-2 enthält 428 Bytes in 4 Rahmen (ohne Pointer; vergleiche Fig. 3.11/G709). Anschließend wird überprüft, ob der Zählerstand des Spaltenzählers AUS(B) kleiner 17 und der Zählerstand des Zeilenzählers AUZ(B) gleich 0 ist. Ist dies der Fall, wird der Pointerzeiger VTU2P(B) gleich 1 und im anderen Fall gleich 0 gesetzt. Dieser Pointerzeiger VTU2P(B) kennzeichnet die positiven Stopfmöglichkeiten der TU-2, die in den Spalten 10 bis 16 und in jeder ersten Zeile auftreten. Diese Zuordnung gilt nur für den dritten der vier Rahmen.

Nachdem zuletzt die Datenpositionen oder Pointerpositionen für eine TU-2 in einer TUG-2 bestimmt worden sind, werden als nächstes die Pointerpositionen bzw. Datenpositionen von einer TU-11 in einer TUG-2 ermittelt. Hierbei wird zunächst überprüft, ob der Zählerstand des Spaltenzählers AUS(B) größer 2 und der Zähler TUG2(B) gleich 0 ist. Wie oben erwähnt, kommen erstmals in der vierten Spalte Daten eines TUG-2 vor. Ergibt die Prüfung, daß der Zählerstand des Spaltenzählers AUS(B) kleiner oder gleich 2 und der Zählerstand des Zählers TUG2(B) ungleich 0 ist, wird zur Marke 11 gesprungen. Im anderen Fall wird gefragt, ob der Zählerstand des Zählers TU11(B) gleich 3 ist. Wird dies verneint, wird der Zählerstand des Zählers TU11(B) um eine Einheit erhöht. Bei einer Bejahung wird der Zählerstand des Zählers TU11(B) gleich 0 gesetzt. Die folgenden Instruktionen und Abfragen werden also nur für die erste TU-11 in einer TUG-2 durchgeführt. Anschließend wird gefragt, ob der Zählerstand des Spaltenzählers AUS(B) kleiner 31 und der Zählerstand des Zeilenzählers AUZ(B) gleich Null ist. In der ersten Zeile und bis zur Spaltenzahl 30 kommen Pointer V1 bis V4 in einer TUG-3 vor (vgl. Fig. 2.6 und 2.7/G709). Liegt das Datenbyte in diesem Teil des STM-1-Rahmens, wird der Pointerzeiger VTU11(B) gleich 1 gesetzt. Im anderen Fall wird der Pointerzeiger VTU11(B) gleich 0 gesetzt und der Zählerstand des Positionszählers TU11POS(B) um eine Einheit erhöht. Beim Zählerstand 104 beginnt der Positionszähler TU11POS(B) wieder bei 0 zu zählen. Der Positionszähler TU11POS(B) gibt die Position eines Datenbytes in einer TU-11 an. Zur Feststellung ob das Datenbyte an einer positiven Stopfmöglichkeit ist, wird überprüft, ob der Zählerstand des Spaltenzählers AUS(B) kleiner 59 und der Zählerstand des Zeilenzählers AUZ(B) gleich 0 ist (vgl. Fig. 3.11/G709). Wird dies bejaht, wird der Pointerzeiger VTU11P(B) gleich 1 gesetzt. Diese Zuordnung gilt ebenfalls nur für den dritten der vier Rahmen. Im anderen Fall wird dieser Pointerzeiger VTU11P(B) gleich 0 gesetzt. Anschließend folgt die Marke 11.

Zum Schluß der Zählerroutine 1 werden die Pointerpositionen und die Datenpositionen einer TU-12 festgestellt. Zuerst wird gefragt, ob der Zählerstand des Spaltenzählers AUS(B) größer 2 und der Zählerstand des Zählers TUG2(B) gleich 0 ist. Ist dies der Fall, wenn also Daten mit TU-12 vorliegen können, wird gefragt, ob der Zählerstand des Zählers TU12(B) gleich 2 ist. In eine TUG-2 können 3 TU-12 eingefügt werden. Die Frage dient also zur Feststellung welche TU-12 vorliegt. Wird die Frage verneint, wird der Zählerstand des Zählers TU12(B) um eine Einheit erhöht. Im anderen Fall wird der Zählerstand des Zählers TU12(B) gleich 0 gesetzt und weitere Instruktionen und Abfragen werden für die erste TU-12 durchgeführt. Anschließend wird gefragt, ob der Zählerstand des Spaltenzählers AUS(B) kleiner 24 und der Zählerstand des Zeilenzählers AUZ(B) gleich 0 ist. Hiermit soll festgestellt werden, ob Pointer vorliegen können. In einer TUG-3 liegen nämlich in den Spalten 3 bis 23 in der ersten Zeile Pointer vor. Wird die Frage bejaht, wird der Pointerzeiger VTU12(B) gleich 1 gesetzt, d. h., es liegt ein V1-, ein V2-, ein V3- oder ein V4-Byte einer TU-12 vor. Im anderen Fall wird der Pointerzeiger VTU12(B) gleich 0 gesetzt. Dann wird der Zählerstand des Positionszählers TU12POS(B) um eine Einheit erhöht. Beim Zählerstand 140 beginnt der Positionszähler TU12POS(B) wieder bei 0 zu zählen. Der Positionszähler TU12POS(B) gibt die Position eines Datenbytes in einer TU-12 an. Anschließend wird noch überprüft, ob der Teil vorliegt, in dem eine positive Stopfmöglichkeit auftreten kann. Dabei wird gefragt, ob der Zählerstand des Spaltenzählers AUS(B) kleiner

12

45 ist und der Zählerstand des Zeilenzählers AUZ(B) gleich 0 ist. In den Spalten 24 bis 44 und der ersten Zeile können positive Stopfmöglichkeiten auftreten. Wird dies bejaht, wird der Pointerzeiger VTU12P(B) gleich 1 gesetzt (Diese Zuordnung gilt ebenfalls nur für den dritten der vier Rahmen). Im anderen Fall wird er gleich 0 gesetzt. Nach dieser letzten Instruktion ist die Zählerroutine 1 beendet.

Im folgenden wird die Zählerroutine 2 beschrieben, die verwendet wird, wenn eine AU-3 vorliegt. Nach dem Start wird überprüft, ob der Zählerstand des Spaltenzählers AUS(B) gleich 86 ist. Wird dies bejaht, wird der Zählerstand des Spaltenzählers AUS(B) gleich 0 gesetzt. Dann wird der Zählerstand des Zeilenzählers AUZ(B) um eine Einheit erhöht. Beim Zählerinhalt von 9 wird der Zeilenzähler AUZ(B) gleich 0 gesetzt. Ist der Zählerstand des Spaltenzählers AUS(B) nicht gleich 86, wird er um eine Einheit erhöht.

In einem VC-3 kann ein Container C-3 oder sieben TUG-2 transportiert werden. Für den Transport von jeweils einer TU-11, TU-12 und TU-2 in einer TUG-2 werden im folgenden die Position im STM-1-Rahmen bestimmt. Zuerst wird die TU-2-Position ermittelt. Zuerst wird hierbei überprüft, ob der Zählerstand des Spaltenzählers AUS(B) gleich 0 oder gleich 29 oder gleich 58 ist (vgl. Fig. 2.3 und 2.9/G709). Falls diese Bedingung erfüllt ist, wird der TU-Zeiger TUG2D(B) gleich 0 gesetzt. In der ersten Spalte des VC-3 liegt der VC-3-POH, in der 30sten Zeile und in der 59sten feste Stopfbytes vor. Das bedeutet, daß die oben genannten Zeilen keine TUG2-Datenbytes enthalten. Ist die Bedingung nicht erfüllt, wird der TU-Zeiger TUG2D(B) gleich 1 gesetzt. Dann wird geprüft, welche TUG-2 vorliegt. Hierbei wird gefragt, ob der Zählerstand des Zählers TUG2(B) gleich 6 ist. Durch diese Abfrage soll die erste TUG-2 ermittelt werden. Wird die Frage verneint, wird der Zählerstand des Zählers TUG2(B) um eine Einheit erhöht. Im anderen Fall wird der Zählerstand des Zählers TUG2(B) gleich 0 gesetzt. Es liegt dann auch die erste TUG-2 vor. Nur für die erste TUG-2 werden die folgenden Instruktionen und Abfragen durchgeführt.

Als nächstes wird überprüft, ob der Zählerstand des Spaltenzählers AUS(B) größer 7 ist. Wird dies verneint, liegt der Teil einer TUG-2 vor, der Pointer von TU-2 enthält. Der Pointerzeiger VTU2(B) wird dann gleich 1 gesetzt. Im anderen Fall wird der Pointerzeiger VTU2(B) gleich 0 gesetzt und der Zählerstand des Positionszählers TU2POS(B) um eine Einheit erhöht. Dann wird gefragt, ob der Zählerstand des Spaltenzählers AUS(B) größer 14 ist. Wird diese Abfrage nicht bestätigt, wird der Pointerzeiger VTU2P(B) gleich 1 gesetzt. Der Pointerzeiger VTU2P(B) kennzeichnet, wie oben schon erwähnt, die Datenbytes, die positive Stopfmöglichkeiten enthalten (Diese Zuordnung gilt nur für den dritten der vier Rahmen). Ist der Zählerstand des Spaltenzählers AUS(B) größer als 14 wird der Pointerzeiger VTU2P(B) gleich 0 gesetzt.

Zur Ermittlung der Pointerpostionen bzw. Datenpositionen einer TU-11 in einer TUG-2 dient der folgende Teil der Zählerroutine 2. Hierbei wird zuerst überprüft, ob der Zählerstand des Zählers TUG2(B) gleich 0 ist. Ist dies nicht der Fall wird zu einer Marke 12 gesprungen. Bei einer Bestätigung wird abgefragt, ob der Zählerstand des Zählers TU11(B) gleich 3 ist. Wird die Frage verneint, wird der Zählerstand des Zählers TU11(B) um eine Einheit erhöht und im anderen Fall gleich 0 gesetzt. Ist die erste TU-11 gefunden (Zählerstand des Zählers TU11(B) gleich 0) wird geprüft, ob der Zählerstand des Spaltenzählers AUS(B) größer 28 ist. Diese Überprüfung und die folgenden werden nur bei der ersten TU-11 durchgeführt. Wird die Frage verneint, wird der Pointerzeiger VTU11(B) gleich 1 gesetzt. Bei einer Bestätigung wird der Pointerzeiger VTU11(B) gleich 0 gesetzt. Das Datenbyte kann also kein Pointer-Byte sein. Im folgenden wird der Zählerstand des Positionszählers TU11POS(B) um eine Einheit erhöht. Beim Zählerstand 104 wird dieser gleich 0 gesetzt. Anschließend wird überprüft, ob der Zählerstand des Spaltenzählers AUS(B) größer 57 ist. Wird die Frage bejaht, liegt keine positive Stopfmöglichkeit vor und der Pointerzeiger VTU11P(B) wird gleich 0 gesetzt. Im anderen Fall kann eine positive Stopfmöglichkeit vorliegen und der Pointerzeiger VTU11P(B) wird mit der Zahl 1 belegt (Diese Zuordnung gilt ebenso nur für den dritten der vier Rahmen). Als nächstes folgt die Marke 12.

Zum Schluß der Zählerroutine 2 werden die Pointerpositionen und die Datenpositionen einer TU-12 festgelegt. Zuerst wird gefragt, ob der Zählerstand des Zählers TUG2(B) gleich 0 ist. Wird dies bejaht liegen Daten einer TU-12 vor und es wird die erste TU-12 gesucht. Hierbei wird gefragt, ob der Zählerstand des Zählers TU12(B) gleich 2 ist. Wird diese Frage verneint, wird der Zählerstand des Zählers TU12(B) um eine Einheit erhöht. Im anderen Fall wird der Zählerstand des Zählers gleich 0 gesetzt und weitere Instruktionen und Abfragen durchgeführt. Es wird dann der Teil gesucht, in dem keine Pointer-Bytes liegen können. Hierbei wird die Frage gestellt, ob der Zählerstand des Spaltenzählers AUS(B) größer 21 ist. Bis zur Spalte 21 können nämlich noch Pointer-Bytes vorliegen. Wird die Frage verneint, wird der Pointerzeiger VTU12(B) gleich 1 und im anderen Fall gleich 0 gesetzt. Anschließend wird der Zählerstand des Positionszählers TU12POS(B) um eine Einheit erhöht. Zum Schluß werden noch positive Stopfmöglichkeiten gesucht. In den Spalten 22 bis 42 können positive Stopfmöglichkeiten auftreten. Daher wird die Frage gestellt, ob der Zählerstand des Spaltenzählers AUS(B) kleiner 43 ist. Ist dies der Fall wird der Pointerzeiger VTU12P(B) gleich 1 (Diese Zuordnung gilt auch nur für den dritten der vier Rahmen) und im anderen Fall gleich 0 gesetzt. Mit dieser letzten Instruktion ist die Zählerroutine 2 beendet.

Nachdem in der Empfangs-Zähleranordnung 6 ermittelt worden ist, wo das Datenbyte in dem AU-Nutzdatenbereich eingeordnet werden kann, wird in der Empfangs-Adressierungsanordnung 7 eine Pufferspeicheradresse PS für ein Datenbyte und eine Pointeradresse PA gebildet und dem Datenbyte werden bestimmte Zählerstände und Zeiger bzw. Kennzeichnungen zugewiesen. Zuerst wird jedoch eine TU-Kennung gleich 0 gesetzt. Diese gibt an, daß keine Daten einer TU-3, TU-12 oder TU-11 vorliegen. Danach wird überprüft, ob ein VC-4 vorliegt. Diese Information wird aus dem Managementspeicher entnommen. Liegt ein VC-4 vor, wird die Pufferspeicheradresse PS gleich dem Inhalt eines Schreibzählers VC4SC gesetzt. Der Zählerstand dieses Schreibzählers VC4SC wird nach jedem Datenbyte um eine Einheit erhöht. Des weiteren wird eine Pointeradresse PA gleich "00111BB" gesetzt. Die beiden Buchstaben "B" sind für den Bereich reserviert. Wenn kein VC-4 vorliegt, wird überprüft, ob ein VC-3 in einer AU-3 vorliegt. Diese Information kommt ebenfalls vom Managementspeicher. Wird diese Abfrage bejaht, wird die Pufferspeicheradresse PS gleich dem Inhalt eines Schreibzählers VC3SC(B) gesetzt. Für jeden Bereich existiert ein Schreibzähler VC3SC(B), dessen Zählerstand jeweils auch nach jedem Datenbyte um eine Einheit erhöht wird. Die Pointeradresse PA wird gleich "00111BB" gesetzt. Ist die letzte Abfrage verneint worden, wird überprüft, ob ein VC-3 in einer AU-4 vorkommt. Ist dies der Fall, wird die Pufferspeicheradresse PS gleich dem Inhalt des Schreibzählers VC3SC(B) und die Pointeradresse PA gleich "BB00000" gesetzt. Im anderen Fall wird zu einer TUG-2-Adreß-Routine gesprungen.

Nach dem Start der Empfangs-TUG2-Adreß-Routine wird eine Zwischenadresse ZW gleich "BBTTT" gesetzt. Die beiden Buchstaben "B" stehen für den Bereich und die drei Buchstaben "T" sind für den Inhalt des Zählers TUG2(B) reserviert. Als nächstes wird dann aus dem Managementspeicher entnommen, ob eine TU-2 vorliegt. Ist dies der Fall, wird die Pointeradresse PA aus der Zwischenadresse und zwei niederwertigen Bits, die gleich "0" gesetzt sind, zusammengefügt. Wird die letzte Abfrage verneint, wird anhand des Inhalts des Managementspeichers überprüft, ob eine TU-12 vorkommt. Wird diese Frage bejaht, wird als Pointeradresse PA ein Datenwort gebildet, welches als höherwertige Bits die Zwischenadresse ZW und als niederwertige Bits den Inhalt des Zählers TU12(B) enthält. Im anderen Fall wird die Pointeradresse PA aus der Zwischenadresse ZW und dem Inhalt des Zählers TU11(B) zusammengesetzt. Anschließend wird noch die Pufferspeicheradresse PS aus der Pointeradresse und dem Inhalt eines Schreibzählers LOSC(PA) zusammengefügt. Die Pointeradresse bildet dabei die höherwertigeren Bits. Es existieren insgesamt 84 Schreibzähler LOSC(PA), die durch die Pointeradresse gekennzeichnet sind. Hiermit ist die Empfangs-TUG2-Adreß-Routine beendet.

In dem Zustandsablauf der Empfangs-Adressierungsanordnung 7 werden im folgenden die in der Empfangs-Zähleranordnung 6 bestimmten Pointerzeiger den Pointerkennzeichnungen V1, V2, V3, V3P und V4 und der Inhalt eines Positionszählers einem Positionszeiger TUPOS zugewiesen. Zuerst wird aus dem Managementspeicher entnommen, ob eine TU-3 vorliegt. Ist dies der Fall, wird die TU-Kennung gleich 4 gesetzt und der Pointerkennzeichnung V1 der Pointerzeiger H1TU3(B), der Pointerkennzeichnung V2 der Pointerzeiger H2TU3(B), der Pointerkennzeichnung V3 der Pointerzeiger H3TU3(B), der Pointerkennzeichnung V3P der Zeiger H3TU3P(B) und der Pointerkennzeichnung V4 der Wert 0 zugewiesen. Der Positionszeiger TUPOS wird noch gleich dem Inhalt des Positionszählers TU3POS(B) gesetzt. Hiernach wird zum Ende der Empfangs-Adressierungsanordnung gesprungen. Liegt keine TU-3 vor, wird überprüft, ob ein VC-3 in einer AU-3 oder ein VC-4 in einer AU-4 vorkommt. Diese Information wird ebenfalls aus dem Managementspeicher entnommen. Wird die Abfrage bejaht, werden die Pointerkennzeichnungen V1, V2, V3, V3P und V4 gleich 0 gesetzt. Im anderen Fall wird überprüft, ob eine TU-11 vorliegt. Ist das der Fall, wird die TU-Kennung gleich 3, ein Zeiger V gleich dem Pointerzeiger VTU11(B), ein Zeiger VP gleich dem Pointerzeiger VTU11P(B) und der Positionszeiger TUPOS gleich dem Inhalt des Positionszählers TU11POS(B) gesetzt. Wenn keine TU-11 vorliegt, wird abgefragt, ob eine TU-12 vorhanden ist. Bei einer Bejahung der Abfrage wird die TU-Kennung gleich 2, der Zeiger V gleich dem Pointerzeiger VTU12(B), der Zeiger VP gleich dem Pointerzeiger VTU12P(B) und der Positionszeiger TUPOS gleich dem Inhalt des Positionszählers TU12POS-(B) gesetzt. Im anderen Fall liegt eine TU-2 vor, bei der ebenfalls eine Zuweisung der Zeiger V und VP stattfindet. Der Zeiger V wird gleich dem Pointerzeiger VTU2(B), der Zeiger VP gleich dem Pointerzeiger VTU2P(B) und der Positionszeiger TUPOS gleich dem Inhalt des Positionszählers TU2POS(B) gesetzt. Außerdem wird die TU-Kennung noch mit 0 belegt.

Als nächstes muß jetzt festgestellt werden, welcher der vier Rahmen bei einer TU-11, TU-12 oder TU-2 vorliegt. Diese Information wird jeweils aus der H4-Anordnung entnommen. Wenn der erste Rahmen vorliegt ($H4_{akt}(B,n) = 0$), wird die Pointerkennzeichnung V1 gleich dem Zeiger V und die restlichen Pointerkennzeichnungen V2, V3, V3P und V4 gleich 0 gesetzt. Wenn $H4_{akt}(B,n)$ gleich 1 ist, liegt der zweite Rahmen vor. Dann wird die Pointerkennzeichnung V2 gleich dem Zeiger V und die restlichen Pointerkennzeichnungen gleich 0 gesetzt. Bei Vorliegen des dritten Rahmens ($H4_{akt}(B,n) = 2$) wird die Pointerkennzeichnung V3 gleich dem Zeiger V und die Pointerkennzeichnung V3P gleich dem Zeiger VP gesetzt. Die anderen Pointerkennzeichnungen werden mit 0 belegt. Ist $H4_{akt}(B,n)$ nicht gleich 2 gehört das Datenbyte zum vierten Rahmen. Hierbei wird nur die Pointerkennzeichnung V4 mit dem Zeiger V belegt.

Die anderen Pointerkennzeichnungen werden gleich 0 gesetzt. Mit dieser letzten Instruktion ist der Zustandsablauf der Empfangs-Adressierungsanordnung 7 beendet.

Nach dem Zustandsablauf der Empfangs-Adressierungsanordnung 7 wird der Zustandsablauf der Schreibentscheidungsanordnung 9 abgearbeitet. Hier wird der Schreibbefehl zum Beschreiben des Pufferspeichers 1 und eine Erhöhung des Zählerstandes verschiedener Schreibzähler vorgenommen. Nach dem Start wird aus dem Managementspeicher entnommen, ob ein VC-4 in einer AU-4 vorliegt. Wird diese Abfrage bejaht, wird überprüft, ob eine J1-Kennzeichnung vorliegt. Diese Information wird von der Empfangs-Pointerschaltung 5 geliefert. Wird dies bejaht wird ein Zeiger J1D mit 1 belegt. Im anderen Fall wird der Zeiger J1D gleich 0 gesetzt. Danach wird ermittelt, ob gültige Daten vorliegen (DAT = 1?). Nur wenn gültige Daten vorliegen, wird ein Schreibbefehl erzeugt.

Ergibt sich, daß keine AU-4 mit einer VC-4 vorhanden ist, wird darauffolgend abgefragt, ob ein AU-3 mit einer VC-3 vorliegt. Diese Information liefert der Managmentspeicher. Ist dies der Fall wird der Zeiger J1D gleich 1 gesetzt, wenn eine J1-Kennzeichnung ermittelt worden ist. Im anderen Fall wird der Zeiger mit 0 belegt. Anschließend wird bei gültigen Daten (DAT = 1) und bei keiner festen Stopfmöglichkeit im AU-3 (Spaltenzähler AUS(B)≠29 und ≠58) der Schreibbefehl gebildet.

Liegt keine AU-3 mit einer VC-3 vor, wird überprüft, ob der Zeiger TUPOS, der die Position eines Datenbytes in einem Container bestimmt, gleich dem Pointerwert für ein V5- oder J1-Byte ist. Der Pointerwert wird von der Empfangs-Pointerschaltung 5 geliefert. Wird dies bejaht, wird der Zeiger J1D mit 1 und im anderen Fall mit 0 belegt.

Dann wird abgefragt, ob eine TU-3 vorliegt. Diese Information gibt der Managmentspeicher. Ist dies der Fall, wird ein Schreibbefehl gegeben, wenn a) gültige Daten (DAT = 1) vorliegen und b) der TU-Zeiger TU3D(B) gleich 1 gesetzt ist und c) keine positive Stopfaktion oder d) eine negative Stopfaktion vorliegt. Wenn keine TU-3 vorkommt, wird nur dann ein Schreibbefehl gegeben, wenn a) gültige Daten (DAT = 1) vorliegen und b) der TU-Zeiger TUG2D(B) gleich 1 ist und c) die Pointerkennzeichnung V1 gleich 0 und d) die Pointerkennzeichnung V2 gleich 0 und e) die Pointerkennzeichnung V3 gleich 0 ist oder eine negative Stopfaktion vorliegt und f) die Pointerkennzeichnung V3P gleich 0 ist oder keine positive Stopfaktion vorliegt und g) die Pointerkennzeichnung V4 gleich 0 ist. Zum Schluß des Moduls Schreibentscheidungsanordnung wird noch überprüft, ob ein Schreibbefehl vorliegt. Ist dies der Fall werden die Zählerstände der Schreibzähler VC4SC, VC3SC(B) und LOSC(PA) erhöht und der Befehl "Pufferspeicher mit Datenbyte und Zeiger J1D beschreiben" gegeben. Damit ist die Schreibentscheidungsanordnung beendet.

Beim Zustandsablauf der H4-Anordnung 8 wird zuerst überprüft, ob der Spaltenzähler AUS(B) gleich 0 und der Zeilenzähler AUZ(B) gleich 5 und der Zeiger DAT gleich 1 ist. In jeder AU-4 oder AU-3 wird in der 1. Spalte und der 5. Zeile das H4-Byte übertragen, welches die Rahmennummer angibt. Es wird zuerst überprüft, ob die AU-4 vorliegt. Dann wird jeweils für jede Bereichskennung der AU-4 (B = 1, 2, 3) und für den jeweiligen Bereich in einer AU-3 ein H4-Wert ermittelt. Die Rahmennummer (H4-Wert) wird aus den beiden niederwertigsten Bits des H4-Bytes gewonnen. Anschließend wird der H4-Wert in einem in der H4-Anordnung 8 befindlichen Speicher gespeichert. Dieser H4-Wert wird als neu empfangener H4-Wert $H4_{neu}$(B,n) bezeichnet. Dieser Wert wird mit den um 1 erhöhten aktuellen H4-Wert $H4_{akt}(B,n-1)$ verglichen. Der aktuelle H4-Wert gibt die Rahmennummer des zuvor empfangenen VC-4 bzw. VC-3 an. Die Variable "n" bezieht sich auf den neu empfangenen und den neu zu bestimmenden aktuellen H4-Wert. "n-1" bezieht sich auf den jeweiligen vorhergehenden H4-Wert. Wenn der neu empfangene H4-Wert gleich dem um 1 erhöhten aktuellen H4-Wert ist, wird der aktuelle H4-Wert gleich dem neu empfangenen H4-Wert gesetzt ($H4_{akt}(B,n): = H4_{neu}(B,n)$). Wenn das nicht der Fall ist, wird überprüft, ob der neu empfangene H4-Wert zusammen mit den davor empfangenen vier letzten H4-Werten eine Sequenz bildet. Eine Sequenz bedeutet, daß die vier Rahmennummern periodisch gesendet werden. Keine Sequenz liegt vor, wenn beispielsweise zuerst der erste und dann der vierte Rahmen gesendet worden ist. Ist eine solche Sequenz vorhanden, wird der aktuelle H4-Wert gleich dem neu empfangenen H4-Wert gesetzt ($H4_{akt}(B,n): = H4_{neu}(B,n)$). Ist das nicht der Fall, wird der aktuelle H4-Wert inkrementiert ($H4_{akt}(B,n): = H4_{akt}(B,n) + 1$).

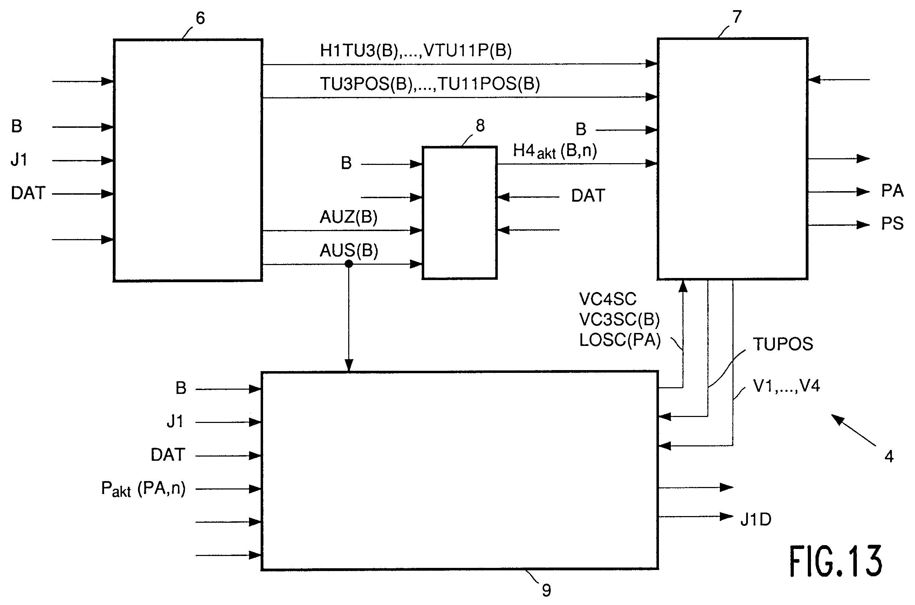

In Fig. 13 ist das Blockschaltbild der Empfangs-Pointerschaltung 5 gezeigt. Diese enthält eine Hauptanordnung 10, einen AU-Pointerzähler 11 und einen AU-Positionszähler 12 zur Zählung der AU-Nutzdatenbytes und der AU-Pointer. Der AU-Pointerzähler 11 erhält von der Vorpufferschaltung 3 die AU-Pointer-Kennung, die den Anfang eines AU-Pointers kennzeichnet. Der AU-Pointerzähler 11 verändert seinen Zählerinhalt beim Auftreten eines AU-Pointerbytes. Der Zählerinhalt des AU-Pointerzählers 11 wird der Hauptanordnung 10 und dem AU-Positionszähler 12 geliefert. Der AU-Positionszähler 12 erhält des weiteren von der Vorpufferschaltung 3 das Sperrsignal und die Bereichskennung B. Der Zählerinhalt des Positionszählers 2 wird an die Hauptanordnung 10 gegeben. Ferner liefert der Positionszähler 12 noch den Zeiger DAT.

Die Hauptanordnung 10 in der Empfangs-Pointerschaltung 5 enthält mehrere Speicher und Zähler. Sie empfängt von der Schreibschaltung 4 eine Pointeradresse PA, die Pointerkennzeichnungen V1, V2 und V3 und die TU-Kennung. Die Pointeradresse PA wird in einem Adreßzwischenspeicher zwischengespeichert. Die Berechnung des Pointerwertes und ob positive oder negative Stopfaktionen vorliegen, wird mit Hilfe eines H1V1-Speichers, eines Pointerspeichers, eines Pointerzählers und eines Stopfzählers durchgeführt. Ferner erhält die Hauptanordnung 10 noch die Datenbytes von der Vorpufferschaltung 3.

Die Hauptanordnung 10 verändert gegebenenfalls den Zeiger DAT bei einer negativen oder posititven Stopfaktion. Dann liefert sie noch die Information, ob eine Stopfaktion vorgesehen ist. Der berechnete Pointerwert $P_{akt}(PA,n)$ für die TU-3, TU-2, TU-12 und TU-11 wird ebenso wie die J1-Kennzeichnung für den Anfang eines VC-4 bzw. VC-3-Containers abgegeben.

Im Anhang B sind die Zustandsabläufe der Empfangs-Pointerschaltung 5 beschrieben. Zuerst wird der Zustandsablauf des AU-Pointerzählers 11 erläutert. Die AU-Pointer-Kennung wird von der Vorpufferschaltung 3 dem AU-Pointerzähler 11 geliefert, wenn der Anfang des AU-Pointers vorliegt. Liegt eine AU-Pointer-Kennung vor, wird der Zählerstand (AUPO) des AU-Pointerzählers 11 auf den Wert 0 gesetzt. Im anderen Fall wird abgefragt, ob der Zählerstand des AU-Pointerzählers 11 den Wert 12 hat. Liegt nicht der Wert 12 vor, so liegt ein Datenbyte des AU-Pointers oder der positiven Stopfstelle vor. Dann wird der Zählerstand (AUPO) des AU-Pointerzählers 11 um eine Einheit erhöht. Im anderen Falle wird keine Veränderung des Inhaltes des AU-Pointerzählers 11 durchgeführt.

Der Zustandsablauf des AU-Positionszählers 12 zeigt die Ermittlung, ob gültige Daten vorliegen, und die Bestimmung der Position des jeweiligen Datenbytes im STM-1-Rahmen. Zuerst wird gefragt, ob ein Sperrsignal von der Vorpufferschaltung 3 geliefert wird. Ist das nicht der Fall, wird der Zeiger DAT gleich 1 gesetzt, d.h. es liegen gültige Daten vor. Dann wird überprüft, ob der erste Bereich vorliegt, d.h. ob die Bereichskennung B gleich 0 ist. Wird dies bejaht, wird der Zählerinhalt (AUVC) des AU-Positionszählers 12 um eine Einheit erhöht. Der Zählerinhalt (AUVC) des AU-Positionszählers 12 wird also nur erhöht, wenn der erste Bereich vorliegt, d.h. er zählt von 0 bis 782 (9 Zeilen, 87 Spalten). Im anderen Fall wird der Inhalt des AU-Positionszählers 12 nicht verändert. Liegt ein Sperrsignal vor, wird der Zeiger DAT gleich 0 gesetzt. Es liegen dann keine gültigen Daten vor. Anschließend wird ermittelt, ob die erste positive Stopfstelle vorliegt. Dies gibt der AU-Pointerzähler 11 aus dem ersten Zweig an. Wenn der Zählerstand (AUPO) des AU-Pointerzählers 11 gleich 9 ist, liegt die erste positive Stopfstelle vor. Dann wird der Zählerstand (AUVC) des AU-Positionszähler 12 gleich 0 gesetzt. Im anderen Fall wird keine Veränderung des Inhaltes des AU-Positionszählers 12 vorgenommen.

Anschließend wird der Zustandsablauf der Hauptanordnung 10 beschrieben. Hier wird nach dem Einlesen der von der Schreibschaltung 4 gelieferten Pointeradresse PA diese in einem Adreßzwischenspeicher abgespeichert. Als nächstes wird überprüft, ob ein H1-, H2-, V1- oder V2-Byte vorliegt. Hierzu wird der Zählerstand (AUPO) des AU-Pointerzählers 11 und die Schreibschaltung 4 ausgewertet. Bei Vorliegen eines H1- oder H2-Byte weist der AU-Pointerzähler 11 die Zählerstände 0 bis 5 auf. Die Schreibschaltung 4 gibt, wenn ein V1- oder V2-Byte vorliegt, eine Pointerkennzeichnung V1 oder V2 aus.

Wird die Abfrage bejaht, wird als nächstes überprüft, ob ein H1- oder V1-Byte vorhanden ist. Ist dies der Fall, wird das H1- oder V1-Byte in einem H1V1-Speicher zwischengespeichert. Wird die Frage verneint, d.h. es liegt ein H2- oder V2-Byte vor, wird zu einer Auswerteroutine gesprungen.

Im folgenden wird die Auswerteroutine erläutert. Zuerst wird das H1- oder V1-Byte aus dem H1V1-Speicher und das neu empfangene H2- oder V2-Byte eingelesen. Aus dem Pointerspeicher wird der zuletzt empfangene Pointerwert $P(PA,n-1)$ und der aktuelle Pointerwert $P_{akt}(PA,n-1)$ aus dem Pointerspeicher abgerufen. Diese Pointerwerte sind in einem Speicherbereich des Pointerspeichers abgelegt, der durch die von der Schreibschaltung 4 gelieferte Pointeradresse PA gekennzeichnet ist. Der aktuelle Pointerwert ist derjenige Pointerwert, der die Anfangsadresse eines VC-4, VC-3, TU-3, TU-2, TU-12 oder TU-11 angibt. Die Variable "n" bezieht sich auf die neu empfangenen und zu berechnenden Pointerwerte. "n-1" bezieht sich auf das vorhergehende Datenbyte. Im folgenden wird dann ein neuer aktueller Pointerwert bestimmt. Dieser ergibt sich aus dem bisherigen aktuellen Pointerwert, einem neu eingelesenen Pointerwert und dem zuletzt empfangenen Pointerwert.

Zuerst wird ein Pointerzähler PZ inkrementiert. Dann wird der Zeiger STOPFDAT gleich 1 gesetzt, der angibt, ob der neue aktuelle Pointerwert gleich dem bisherigen aktuellen oder dem neu empfangenen Pointerwert gesetzt wird. Ist der neu eingegebene Pointerwert $P(PA,n)$ ungleich dem zuletzt empfangenen Pointerwert $P(PA,n-1)$ wird der Zählerstand des Pointerzählers PZ auf den Wert 1 gesetzt. Ist das Gegenteil der Fall, wird überprüft, ob der aktuelle Pointerwert $P_{akt}(PA,n-1)$ gleich dem neuen Pointerwert $P(PA,n)$ ist. Ist dies der Fall, wird der Zählerstand des Pointerzählers PZ auf den Wert 0 gesetzt. Wird die Frage verneint, wird zuerst der Zeiger STOPFDAT gleich 0 gesetzt und dann überprüft, ob der Inhalt des Pointerzählers PZ gleich 3 ist. Ist dies nicht der Fall, wird der aktuelle Pointerwert nicht verändert, d.h. $P_{akt}$-(PA,n): = $P_{akt}$(PA,n-1). Ist der Inhalt des Pointerzählers PZ gleich 3, wird der neue aktuelle Pointerwert $P_{akt}$-(PA,n) gleich dem neuen Pointerwert P(PA,n) gesetzt.

Außer der Aktualisierung des Pointerwertes wird in der Auswerteroutine noch überprüft, ob eine Stopfaktion durchgeführt werden soll. In der CCITT-Empfehlung G709 sind die Bedingungen in Fig. 3.3. erläutert, wann eine positive oder eine negative Stopfstelle vorliegt. Der aus zehn Bit bestehende Pointerwert hat abwechselnd sogenannte I-Bits und D-Bits. Ist die Mehrzahl der fünf I-Bits invertiert, soll eine positive Stopfaktion, und ist die Mehrzahl der fünf D-Bits invertiert, soll eine negative Stopfaktion durchgeführt werden.

Eine Stopfaktion wird nur vorgenommen, wenn der Zeiger STOPFDAT gleich 1 ist, d. h. der aktuelle Pointerwert $P_{akt}$(PA, n) ist noch nicht bestimmt. Wenn eine Stopfaktion durchgeführt werden soll, wird überprüft, ob der Inhalt eines Stopfzählers SZ den Wert 3 aufweist. Wird dies bejaht, wird gefragt, ob ein H2-Byte vorliegt. Dies wird aus dem Zählerstand (AUPO) des AU-Pointerzählers 11 entnommen. Liegt ein H2-Byte vor, wird überprüft, ob eine positive Stopfaktion vorliegt. Ist dies der Fall, wird der aktuelle Pointerwert $P_{akt}$(PA,n) gleich 0 gesetzt, wenn dieser gleich 782 ist. Sonst wird der aktuelle Pointerwert $P_{akt}$-(PA,n) inkrementiert ($P_{akt}$(PA,n): = $P_{akt}$(PA,n-1) + 1). Der aktuelle Pointerwert wird auf 782 geprüft, weil in einer Verwaltungseinheit AU-3 bzw pro Bereich in einer Verwaltungseinheit AU-4 783 Datenbytes vorliegen. Liegt eine negative Stopfaktion vor, wird der aktuelle Pointerwert dekrementiert ($P_{akt}$(PA,n): = $P_{akt}$(PA,n-1)-1), wenn dieser ungleich 0 ist. Sonst wird der aktuelle Pointerwert gleich 782 gesetzt. Wenn kein H2-Byte vorkommt, wird der bisherige aktuelle Pointerwert übernommen und der Zählerstand des Stopfzählers SZ wird gleich dem Wert 0 gesetzt. Ist der Inhalt des Stopfzählers SZ ungleich 3, wird keine Stopfaktion durchgeführt und der Stopfzähler SZ wird mit dem Wert 0 belegt. Falls keine Stopfaktion durchgeführt werden soll, wird überprüft, ob der Inhalt des Stopfzählers SZ den Wert 3 aufweist. Ist dies der Fall, wird der Inhalt des Stopfzählers SZ nicht verändert. Im anderen Fall wird der Stopfzähler SZ inkrementiert. Damit ist die Auswerteroutine beendet.

Nachdem die Auswerteroutine abgearbeitet ist, wird im Zustandsablauf der Hauptanordnung 10 der aktuelle Pointerwert $P_{akt}$(PA,n) und der neue Pointerwert P(PA,n) und die Stopfinformation, ob positiv, negativ oder überhaupt nicht gestopft wird, im Pointerspeicher abgelegt.

Der folgende Teil des Zustandsablaufs der Hauptanordnung 10 ermittelt, ob ein H3- oder V3-Byte vorliegt und die Stelle des J1-Bytes. Es liegt also kein H1-, H2-, V1- oder V2-Byte vor. Dann wird gefragt, ob ein H3-Byte vorliegt. Dies wird aus dem Zählerstand (AUPO) des AU-Pointerzählers 11 ermittelt. Ist ein H3-Byte vorhanden, wird überprüft, ob eine negative Stopfstelle vorliegt. Liegt keine negative Stopfstelle vor, wird der Zeiger DAT gleich 0 gesetzt und zum Ende gesprungen. Es liegen dann also keine Daten im H3-Pointer und auch kein J1-Byte vor. Im anderen Fall wird der Zeiger DAT gleich 1 gesetzt, d.h. es liegen an der Stelle des H3-Pointers Nutzdatenbytes vor. Anschließend wird zur Marke 21 gesprungen. Wenn das vorliegende Datenbyte kein H3-Byte ist, wird überprüft, ob eine Stopfstelle für eine AU-3 oder AU-4 vorliegt. Der Inhalt des AU-Pointerzählers 11 weist in diesem Fall die Zahlen 9, 10 oder 11 auf. Liegt keine solche Stopfstelle vor, wird zur Marke 21 gesprungen. Im anderen Fall wird, wenn eine positive Stopfstelle vorliegt, der Zeiger DAT gleich 0 gesetzt, d.h. es liegen keine Nutzdatenbytes vor, und anschließend zum Ende gesprungen.

Als nächstes folgt dann die Marke 21. Weiter wird dann der Pointerwert $P_{akt}$(PA,n) für die TU-3, TU-2, TU-12 und TU-11 und die Stopfinformation aus dem Pointerspeicher an die Schreibschaltung 4 geliefert. Ein Pointerwert $P_{akt}$(PA,n) für die AU-4 oder AU-3 wird nicht an die Schreibsteuerschaltung ausgegeben und bleibt im Pointerspeicher gespeichert.

Dann wird ermittelt, ob das J1-Byte vorliegt. Hierzu wird überprüft, ob der aus dem Pointerspeicher ausgelesene AU-Pointerwert $P_{akt}$(PA,n) gleich dem Inhalt (AUVC) des AU-Positionszählers 12 ist. Wenn dies der Fall ist, wird eine J1-Kennzeichnung an die Schreibschaltung 4 gegeben.

Zuletzt wird noch ermittelt, ob ein V3-Byte vorliegt. Ein solches V3-Byte ist vorhanden, wenn die Schreibschaltung 4 die Pointerkennzeichnung V3 liefert. Die folgende Überprüfung, ob Stopfaktionen vorliegen, werden nur getätigt, wenn der Zeiger STOPFDAT gleich 1 ist. Wird dies bejaht, wird zuerst überprüft, ob eine positive Stopfaktion vorliegt. Ist dies der Fall, wird zu einer Kennungsroutine 1 (Anhang B) gesprungen. In der Kennungsroutine 1 wird, wenn eine TU-3 vorliegt, d.h. die von der Schreibschaltung 4 gelieferte TU-Kennung gleich 4 ist, der neue aktuelle Pointerwert $P_{akt}$(PA,n) inkrementiert, wenn der bisherige Pointerwert $P_{akt}$(PA,n-1) nicht gleich 764 ist. Ist der bisherige Pointerwert 764, wird der neue Pointerwert $P_{akt}$(PA,n) gleich 0 gesetzt. Wenn eine TU-2 (TU-Kennung gleich 0) vorliegt, wird der neue Pointerwert $P_{akt}$(PA,n) nur bei der Zahl 427 nicht inkrementiert. Dann wird er gleich 0 gesetzt. Wenn die TU-Kennung gleich 2 (TU-12) ist, wird der neue Pointerwert $P_{akt}$(PA,n) gleich 0 gesetzt, falls der bisherige Pointerwert $P_{akt}$(PA,n-1) gleich 139 ist und sonst inkrementiert. Bei einer TU-11 (TU-Kennung gleich 3) wird

der neue Pointerwert $P_{akt}$(PA,n) gleich 0 gesetzt, wenn der bisherige Pointerwert $P_{akt}$(PA,n-1) gleich 103 ist und sonst inkrementiert. Nach Abarbeitung der Kennungsroutine 1 wird der aktuelle Pointerwert $P_{akt}$(PA,n) im Pointerspeicher gespeichert.

Falls eine negative Stopfaktion vorliegt, wird zu einer Kennungsroutine 2 (Anhang B) gesprungen. In der Kennungsroutine 2 wird zuerst gefragt, ob die TU-Kennung gleich 4 ist, d.h. es liegt eine TU-3 vor. Ist dies der Fall, wird überprüft, ob der bisherige aktuelle Pointerwert $P_{akt}$(PA,n-1) gleich 0 ist. Wird dies bejaht, wird der neue aktuelle Pointerwert $P_{akt}$(PA,n) gleich 764 gesetzt und im anderen Fall dekrementiert. Wenn eine TU-2 (TU-Kennung gleich 0) vorliegt, wird der neue Pointerwert $P_{akt}$(PA,n) gleich 427 gesetzt, wenn der bisherige Pointerwert $P_{akt}$(PA,n-1) gleich 0 ist und im anderen Fall dekrementiert. Bei der TU-Kennung gleich 2 (TU-12) wird der neue Pointerwert $P_{akt}$(PA,n) gleich 139 gesetzt, wenn der bisherige Pointerwert $P_{akt}$(PA,n-1) gleich 0 ist und im anderen Fall dekrementiert. Wenn eine TU-11 (TU-Kennung gleich 3) vorliegt, wird der neue Pointerwert $P_{akt}$(PA,n) dekrementiert, wenn der bisherige aktuelle Pointerwert $P_{akt}$(PA,n-1) ungleich 0 ist und im anderen Fall, wenn der bisherige aktuelle Pointerwert $P_{akt}$(PA,n-1) gleich 0 ist, wird der neue aktuelle Pointerwert $P_{akt}$(PA,n) gleich 103 gesetzt. Damit ist das Ende des Zustandsablaufs der Hauptanordnung 10 erreicht.

Eine Inkrementierung oder Dekrementierung des Pointerwertes in den Kennungsroutinen 1 oder 2 findet erst statt, wenn das H3-Pointerbyte einer TU-3 oder das V3-Pointerbyte einer TU-2, TU-12 oder TU-11 aufgetreten ist. Falls die Auswertung der H1- bzw. V1- und H2- bzw. V2-Pointerbytes ergibt, daß eine positive oder negative Stopfaktion vorliegt und der aktuelle Pointerwert nach dem H2- bzw. V2-Pointerbyte und vor dem H3- bzw. V3-Pointerbyte auftritt, wird trotzdem erst nach dem Auftreten des H3- bzw. V3-Pointerbytes eine Inkrementierung oder Dekrementierung des aktuellen Pointerwertes durchgeführt. Die negative oder positive Stopfstelle hat nämlich erst mit dem Auftreten des H3- bzw. V3-Pointerbytes Einfluß auf den Anfang der betreffenden TU-Transporteinheit.

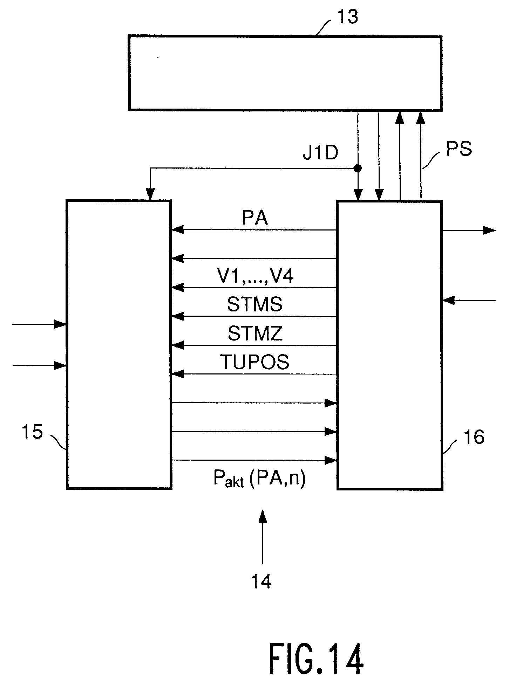

Ein zweites Ausführungsbeispiel der erfindungsgemäßen Schaltungsanordnung zur Steuerung eines Pufferspeichers 13 für einen Auslesevorgang ist schematisch in der Fig. 14 dargestellt. Der Pufferspeicher 13 wird von einer Sende-Steueranordnung 14 gesteuert und erhält von dieser einen Lesebefehl und eine Pufferspeicheradresse PS. Der Pufferspeicher 13 liefert der Sende-Steueranordnung die an der Pufferspeicheradresse PS abgelegten Nutzdatenbytes und den Zeigerwert J1D. Des weiteren erhält die Sende-Steueranordnung 14 noch Daten von einem Managementspeicher des Systemmanagement und Stopfdaten aus einer hier nicht näher dargestellten Stopfentscheidungsschaltung, die beispielsweise aus der deutschen Patentanmeldung P 41 08 429 bekannt ist. Die Leseschaltung liefert dann noch Ausgangsdaten an die nicht näher dargestellte nachfolgende Schaltungsanordnung, welche die Ausgangsdaten mit SOH-Daten kombiniert.

Die Sende-Steueranordnung 14 enthält eine Sende-Pointerschaltung 15 und eine Leseschaltung 16. Die Leseschaltung 16 liefert an die Sende-Pointerschaltung 15 eine Pointeradresse PA eine TU-Kennung, Pointerkennzeichnungen V1, V2, V3, V3P und V4, den Zählerstand von einem STM-Spaltenzähler und STM-Zeilenzähler und einen Positionszeiger TUPOS. Die Sende-Pointerschaltung 15 liefert an die Leseschaltung 16 die H1-, H2-, V1- und V2-Bytes. Des weiteren wird mitgeteilt, wann eine positive bzw. negative Stopfaktion vorliegt und der Pointerwert.

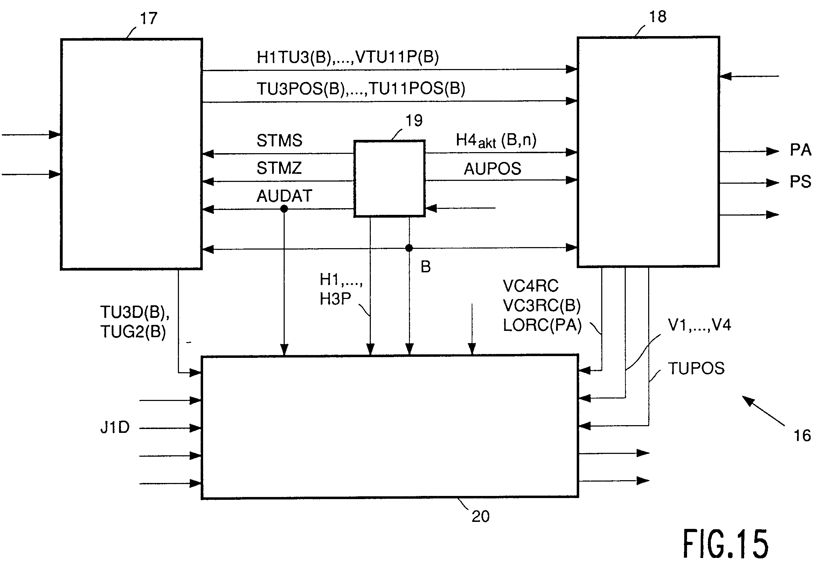

In Fig. 15 ist ein Blockschaltbild der Leseschaltung 16 gezeigt, die eine Sende-Zähleranordnung 17, eine Sende-Adressierungsanordnung 18, eine Sende-Rahmenzähleranordnung 19 und eine Leseentscheidungsanordnung 20 enthält. Die Sende-Zähleranordnung 17 ist ähnlich aufgebaut wie die Empfangs-Zähleranordnung 6. Sie enthält drei einem Bereich zugeordnete Zählerstufen. Jede Zählerstufe enthält einen Spaltenzähler AUS(B), einen Zeilenzähler AUZ(B), einen Zähler TUG2(B), einen Zähler TU11(B) und einen Zähler TU12(B). Ferner sind noch vier Positionszähler TU3POS(B), TU2POS(B), TU12POS(B) und TU11POS(B) in jeder Zählerstufe vorhanden. Diese Zähler haben die gleiche Funktion wie die Zähler in der Empfangs-Zähleranordnung 6. Anhand der verschiedenen Zählerstände setzt die Sende-Zähleranordnung 17 verschiedene Pointerzeiger (H1TU3(B), ..., VTU12(B)), die kennzeichnen, daß das anliegende Datenbyte möglicherweise ein Pointerbyte oder eine Stopfstelle ist. Diese Pointerzeiger werden an die Sende-Adressierungsanordnung 18 geliefert. Des weiteren erhält die Sende-Adressierungsanordnung 18 die Zählerstände der Positionszähler.

Von dem Pufferspeicher 13 werden der Sende-Zähleranordnung 17 die Datenbytes zugeführt und von einem Managementspeicher des Systemmanagements erhält die Sende-Zähleranordnung 17 Daten zugeführt. An die Leseentscheidungsanordnung 20 liefert die Sende-Zähleranordnung 17 noch die TU-Zeiger TU3D(B) und TUG2(B).

In der Sende-Rahmenzähleranordnung 19 ist ein STM-Spaltenzähler STMS, ein STM-Zeilenzähler STMZ, ein Bereichszähler B und ein Positionszähler AUPOS vorhanden. Die Zähler werden jeweils durch ein Start-Kennzeichen von dem Systemmanagement gestartet, daß periodisch geliefert wird. Der STM-Spaltenzähler zählt die Spalten des STM-1-Rahmens und der STM-Zeilenzähler die Zeilen des STM-1-Rahmens. Der Bereichszähler ordnet jeder Spalte einen von drei Bereichen zu und liefert seinen Zählerinhalt als Bereichskennung B an die Sende-Zähleranordnung 17, die Sende-Adressierungsanordnung 18 und die Leseentscheidungsanordnung 20. Der Positionszähler AUPOS zählt in einem STM-1-Rahmen die Positionen in einem AU-Nutzdatenbereich bei der Bereichskennung B = 0. Die Zählerinhalte des STM-Spaltenzählers und des STM-Zeilenzählers werden noch der Sende-Zähleranordnung 17 zugeführt. Des weiteren wird in der Sende-Rahmenzähleranordnung 19 noch ein Zeiger AUDAT erzeugt, der die Datenbytes des AU-Nutzdatenbereiches kennzeichnet. Dieser Zeiger AUDAT wird an die Sende-Zähleranordnung 17 und die Leseentscheidungsanordnung 20 geliefert. Die Sende-Rahmenzähleranordnung 19 gibt auch noch an, welcher der vier Rahmen vorliegt. Hierzu gibt sie den Wert $H4_{akt}(B,n)$ aus, der an die Sende-Adressierungsanordnung 18 geliefert wird. Ferner gibt die Sende-Rahmenzähleranordnung 19 noch eine Pointerkennzeichnung H1, H2, H3 und H3P für die AU-Pointerbytes an die Leseentscheidungsanordnung 20.

In der Sende-Adressierungsanordnung 18 wird die TU-Kennung, die Pointeradresse PA, die Pufferspeicheradresse PS, eine Pointerkennzeichnung V1, V2, V3, V3P und V4 und ein Positionszeiger TUPOS gebildet. Der Positionszeiger TUPOS liefert den Wert eines der Positionszähler TU3POS(B), TU2POS(B), TU12POS(B) oder TU11POS(B). Eine Pointerkennzeichnung V1 bis V4 kennzeichnet, welches Pointerbyte vorliegt und ob eine positive Stopfmöglichkeit vorhanden ist.

Die Leseentscheidungsanordnung 20, die Datenbytes und den Zeiger J1D von dem Pufferspeicher 13, H1-, H2-, V1- und V2-Bytes und eine Mitteilung über eine Stopfaktion von der Sende-Pointerschaltung 15 empfängt, erzeugt einen Lesebefehl und Ausgangsdatenbytes. Zur Bildung der Pufferspeicheradresse PS wird von der Leseentscheidungsanordnung 20 an die Sende-Adressierungsanordnung 18 noch der Zählerstand von einem Lesezähler geliefert. Ebenso wie in der Schreibentscheidungsanordnung 9 sind in der Leseentscheidungsanordnung 20 für einen VC-4 ein Lesezähler VC4RC, für jeweils einen VC-3 ein Schreibzähler VC3RC(B) und für maximal 84 niederbitratige Container ein Schreibzähler LORC(PA) vorhanden. Außerdem ist noch ein AU-3-Spaltenzähler AU3S(B) vorhanden, der die Spalten einer AU-3 zählt.

Die Anordnungen 17 bis 20 können ebenfalls Teile einer anwendungsspezifischen integrierten Schaltung (ASIC) oder Prozessorelemente sein, die im folgenden über einen Zustandsablauf erläutert werden.

Zuerst wird die Sende-Rahmenzähleranordnung mittels des im Anhang C aufgeführten Zustandsablaufs bechrieben. Wenn ein vom Systemmanagement periodisch der Sende-Rahmenzähleranordnung zugeführtes Start-Kennzeichen vorliegt, wird der Zählerstand des STM-Spaltenzählers STMS, des STM-Zeilenzählers STMZ und des Bereichszählers B auf 0 gesetzt. Der Positionszähler AUPOS wird auf 521 gesetzt (Der Wert 521 stellt die Position des letzten Byte im vorhergehenden Rahmen für den ersten Bereich dar.). Der Zeiger $H4_{akt}(B,n)$ wird inkrementiert. Bei dem Wert 4 wird der Zeiger $H4_{akt}(B,n)$ auf 0 gesetzt. Wenn kein Start-Kennzeichen vorliegt, wird der STM-Spaltenzähler STMS inkrementiert bis zum Wert 270. Dann wird STM-Spaltenzähler STMS auf 0 gesetzt. Falls der STM-Spaltenzähler STMS gleich 0 ist, wird der Zeilenzähler STMZ um eine Einheit erhöht bis zum Wert 9. Dann wird dieser Spaltenzähler gleich 0 gesetzt. Der Bereichszähler wird ebenfalls inkrementiert wenn kein Start-Kennzeichen vorliegt. Der Bereichszähler stellt einen Modulo-3-Zähler dar, der bei dem Zählerinhalt von 3 auf 0 gesetzt wird. Mit den bisher beschriebenen Zählern wird eine Spalte und eine Zeile im STM-1-Rahmen gekennzeichnet und der jeweilige Bereich mittels einer Bereichskennung B gekennzeichnet.

Als nächstes werden die Pointerkennzeichnungen H1, H2, H3 und H3P gebildet, welche die Pointerbytes im AU-Pointer kennzeichnen. Wenn der Zählerinhalt des STM-Zeilenzählers STMZ gleich 3 ist, wird überprüft, zu welcher Spalte das anliegende Datenbyte gehört. Wenn der STM-Spaltenzähler STMS gleich 0, 1 oder 2 ist, wird die Pointerkennzeichnung H1 gleich 1 gesetzt und im anderen Fall gleich 0, wenn der STM-Spaltenzähler STMS gleich 3, 4 oder 5 ist, wird die Pointerkennzeichnung H2 gleich 1 und im anderen Fall gleich 0 gesetzt, wenn der STM-Spaltenzähler STMS gleich 6, 7 oder 8 ist, wird die Pointerkennzeichnung H3 gleich 1 und im anderen Fall gleich 0 gesetzt und wenn der STM-Spaltenzähler STMS gleich 9, 10 oder 11 ist, liegt eine positive Stopfmöglichkeit vor und die Pointerkennzeichnung H3P wird gleich 1 und im anderen Fall gleich 0 gesetzt. Zuletzt wird noch ein Zeiger AUDAT gleich 1 gesetzt, wenn der STM-Spaltenzähler STMS größer 8 ist. Im anderen Fall wird der Zeiger AUDAT der Wert 0 zugewiesen. Der Zeiger AUDAT kennzeichnet den Bereich für gültige Sendedaten und schließt die SOH des STM-1-Rahmens und den AU-Pointerbereich aus. Dann wird überprüft, ob der Zeiger AUDAT gleich 1 und die Bereichskennung B gleich 0 ist. Wird dies bejaht, wird der Positionszähler AUPOS inkrementiert. Bei dem Wert 783 wird der Zählerstand des Positionszählers auf 0 gesetzt.

Im folgenden wird der Zustands- oder Programmablauf der Sende-Zähleranordnung 17 beschrieben. Nach dem Start wird abgefragt, ob der Zeiger AUDAT gleich 1 ist. Ist dies nicht der Fall, wird zum Start zurückgesprungen. Im anderen Fall wird überprüft, ob der Zählerinhalt des STM-Spaltenzählers STMS gleich 9 und der Zählerinhalt des STM-Zeilenzählers STMZ gleich 3 ist. Wird dies bejaht, wird zur Initialisierungsroutine gesprungen, die beim Zustandsablauf der Empfangs-Zähleranordnung 6 (Anhang A) beschrieben worden ist. Die Zähler der einzelnen Zählerstufen in der Sende-Zähleranordnung 17 werden also direkt nach Auftreten der AU-Pointerbytes initialisiert. Wenn das Datenbyte direkt nach den AU-Pointerbytes nicht vorliegt, wird überprüft, ob die Bereichskennung B gleich 0 ist. Ist dies der Fall, wird überprüft, ob eine AU-4 vorliegt. Diese Information wird vom Managementspeicher erhalten. Ist dies der Fall, wird zur Zählerroutine 1 (Anhang A) gesprungen, die auch schon in der Empfangs-Zähleranordnung 6 verwendet worden ist. Im anderen Fall wird zur Zählerroutine 2 (Anhang A) gesprungen, die ebenfalls in der Empfangs-Zähleranordnung 6 beschrieben worden ist. Ist die Bereichskennung B ungleich 0, wird zurück zum Start gesprungen und der Programmablauf der Sende-Zähleranordnung 17 ist beendet. Bei der Sende-Zähleranordnung 17 ist nur eine Zählstufe erforderlich, da die einzelnen Bereiche innerhalb des STM-1-Rahmens nicht zueinander verschoben sind, d.h. es wird nur für den 1. Bereich (Bereichskennung B = 0) eine Zählung durchgeführt.

In der Sende-Adressierungsanordnung 18 wird außer der TU-Kennung eine Pointeradresse PA und eine Pufferspeicheradresse PS für ein Datenbyte gebildet. Im Zustandsablauf der Sende-Adressierungsanordnung 18 wird zuerst die TU-Kennung gleich 0 gesetzt. Danach wird überprüft, ob ein VC-4 vorliegt (aus Managementspeicher). Ist das der Fall, wird die Pufferspeicheradresse PS gleich dem Inhalt des Lesezählers VC4RC und die Pointeradresse PA gleich "00111BB" gesetzt. Die beiden Buchstaben "B" sind für den Bereich reserviert. Wenn kein VC-4 vorliegt, wird abgefragt, ob in einer AU-3 ein VC-3 vorhanden ist (aus Managementspeicher). Wird dies bejaht, wird die Pufferspeicheradresse PS gleich dem Inhalt des Lesezählers VC3RC(B) und die Pointeradresse PA gleich "00111BB" gesetzt. Liegt auch keine VC-3 in einer AU-3 vor, wird überprüft, ob eine VC-3 in einer AU-4 transportiert wird (aus Managementspeicher). Wird dies bejaht, wird die Pufferspeicheradresse PS gleich dem Inhalt des Lesezählers VC3RC(B) und die Pointeradresse PA gleich "BB00000" gesetzt. Wird diese Abfrage ebenfalls verneint, wird zur Sende-TUG-2-Adreß-Routine (Anhang C) gesprungen.

Zuerst wird nach dem Start der Sende-TUG2-Adreß-Routine eine Zwischenadresse ZW gleich "BBTTT" gesetzt. Die beiden Buchstaben "B" stehen für den Bereich und die drei Buchstaben "T" sind für den Inhalt des Zählers TUG2(B) reserviert. Wenn eine TU-2 vorliegt (aus Managementspeicher) wird die Pointeradresse PA gleich der Zwischenadresse und bei niederwertigen Bits, die gleich "0" gesetzt sind, zusammengefügt. Wenn keine TU-2 vorliegt, wird aus dem Managementspeicher entnommen, ob eine TU-12 vorkommt. Ist dies der Fall, wird als Pointeradresse PA ein Datenwort gebildet, welches als höherwertige Bits die Zwischenadresse ZW und als niederwertige Bits den Inhalt des Zählers TU12(B) enthält. Liegt keine TU-12 vor, liegt eine TU-11 vor. Die Pointeradresse PA wird dann aus der Zwischenadresse und dem Inhalt des Zählers TU11(B) zusammengefügt. Anschließend wird noch die Pufferspeicheradresse PS aus der Pointeradresse PA und dem Inhalt des Lesezählers LORC(PA) zusammengesetzt. Die Pointeradresse bildet dabei die höherwertigen Bits. Hiermit ist die Sende-TUG2-Adreß-Routine beendet.

Anschließend werden die in der Sende-Zähleranordnung 17 bestimmten Zeiger für Pointerpositionen den Pointerkennzeichnungen V1, V2, V3, V3P und V4 und der Inhalt eines Positionszählers dem Positionszeiger TUPOS in der Sende-Adressierungsanordnung 18 zugewiesen. Als erstes wird mit Hilfe des Managementspeichers überprüft, ob eine TU-3 vorliegt. Ist dies der Fall, wird die TU-Kennung gleich 4 gesetzt und der Pointerkennzeichnung V1 der Pointerzeiger H1TU3(B) der Pointerkennzeichnung V2 der Pointerzeiger H2TU3(B) der Pointerkennzeichnung V3 der Pointerzeiger H3TU3(B), der Pointerkennzeichnung V3P der Pointerzeiger H3TU3P(B) und der Pointerkennzeichnung V4 der Wert 0 zugewiesen. Dem Positionszeiger TUPOS wird noch der Zählerinhalt des Positionszählers TU3POS(B) zugewiesen.

Liegt keine TU-3 vor, wird gefragt, ob eine VC-3 in einer AU3 oder ein VC-4 in einer AU-4 vorliegt. Wird die Frage bejaht, werden die Pointerkennzeichnungen V1 gleich H1, V2 gleich H2, V3 gleich H3, V3P gleich H3P und V4 gleich 0 und der Positionszeiger TUPOS gleich dem Zählerstand des Positionszählers AUPOS gesetzt. Im anderen Fall wird überprüft, ob eine TU-11 vorhanden ist (aus dem Managementspeicher). Ist dies der Fall, wird die TU-Kennung gleich 3 gesetzt, ein Zeiger V gleich dem Pointerzeiger VTU11(B), ein Zeiger VP gleich dem Pointerzeiger VUT11P(B) und der Positionszeiger TUPOS gleich dem Inhalt des Positionszählers TU11POS(B) gesetzt. Liegt keine TU-11 vor, wird mittels des Managementspeichers dann überprüft, ob eine TU-12 vorhanden ist. Ist dies der Fall, wird die TU-Kennung gleich 2, der Zeiger V gleich dem Pointerzeiger VTU12(B), der Zeiger VP gleich dem Pointerzeiger VTU12P(B) und der Positionszeiger TUPOS gleich dem Inhalt des Positionszählers TU12POS(B) gesetzt. Im anderen Fall wird die TU-Kennung mit dem Wert 0, der Zeiger V mit dem Pointerzeiger VTU2(B), der Zeiger VP mit dem Pointerzeiger VTU2P(B) und der Positionszeiger mit dem Inhalt des Positionszählers TU2POS(B) belegt.

Im folgenden werden die Zeiger V und VP den Pointerkennzeichnungen V1 bis V4 zugewiesen. Hierzu muß ermittelt werden, welcher Rahmen vorliegt. Wenn der erste Rahmen vorliegt ($H4_{akt}(B,n) = 0$), wird die Pointerkennzeichnung V1 gleich dem Zeiger V und die restlichen Pointerkennzeichnungen gleich 0 gesetzt. Wenn der zweite Rahmen vorliegt (H4$_{akt}$(B,n) = 1), wird die Pointerkennzeichnung V2 gleich dem Zeiger V und die restlichen Pointerkennzeichnungen gleich 0 gesetzt. Bei Vorliegen des dritten Rahmens (H4$_{akt}$(B,n)- = 2) wird die Pointerkennzeichnung V3 gleich dem Zeiger V und die Pointerkennzeichnung V3P gleich dem Zeiger VP gesetzt. Die anderen Zeiger werden mit dem Wert 0 belegt. Liegt der vierte Rahmen vor, wird der Pointerkennzeichnung V4 der Zeiger V und den anderen Pointerkennzeichnungen der Wert 0 zugeordnet. Mit dieser letzten Instruktion ist der Zustandsablauf der Sende-Adressierungsanordnung 18 beendet.

Im folgenden wird der Zustandsablauf der Leseentscheidungsanordnung 20 (Anhang C) beschrieben. Hier wird der Lesebefehl zum Beschreiben des Pufferspeichers 13 und eine Erhöhung des Zählerstandes verschiedener Zähler vorgenommen. Nach dem Start wird aus dem Managementspeicher entnommen, ob ein VC-4 in einer AU-4 vorliegt. Ist das der Fall, wird überprüft, ob die Bereichskennung B gleich 0 ist. Wird dies bejaht, wird als nächstes überprüft, ob die Pointerkennzeichnung H1 gleich 1 ist. Dann liegt nämlich das erste Byte des AU-Pointers vor. Ist die Pointerkennzeichnung H1 gleich 1, wird als Ausgangsdatenbyte das H1-Byte, welches von der Sende-Pointerschaltung 15 geliefert wird, verwendet. Ist die Pointerkennzeichnung H1 nicht gleich 1, wird überprüft, ob die Pointerkennzeichnung H2 gleich 1 ist. In diesem Fall wird das von der Sende-Pointerschaltung 15 gelieferte H2-Byte als Ausgangsdatenbyte verwendet. Wenn auch die Pointerkennzeichnung H2 ungleich 1 ist, wird ein Lesebefehl für jeweils drei Datenbytes erzeugt, wenn a) der Zeiger AUDAT gleich 1 ist und keine positive Stopfaktion vorliegt oder b) eine negative Stopfaktion vorliegt.

Wenn die Bereichskennung B ungleich 0 ist, wird zuerst abgefragt, ob die Pointerkennzeichnung H1 gleich 1 ist. Ist dies der Fall, werden die Ausgangsdaten mit Festwerten (Y-Bytes) belegt (vergl. Fig. 3.1/G709). Ist die Pointerkennzeichnung H1 ungleich 1, wird überprüft, ob die Pointerkennzeichnung H2 gleich 1 ist. Ist dies der Fall, werden die Ausgangsdaten mit weiteren Festwerten, d.h. alle Bits werden gleich 1 gesetzt, belegt (vergl. Fig. 3.1/G709).

Als nächstes wird dann abgefragt, ob der Lesebefehl vorliegt. Wird dies bejaht, wird überprüft, ob der Zeiger J1D, der vom Pufferspeicher 13 geliefert wird, gleich 1 ist. Wird dies ebenfalls bejaht, wird, wenn der erste Bereich vorliegt, d.h. die Bereichskennung B gleich 0 ist, der Zählerinhalt des Lesezählers VC4RC inkrementiert. Bei dem Zählerinhalt 64 wird der Lesezähler VC4RC gleich 0 gesetzt. Wenn der zweite Bereich vorliegt, d.h. die Bereichskennung B gleich 1 ist, wird der Lesezähler um zwei Einheiten erhöht. Dies kann nach dem Einschalten der Schaltungsanordnung passieren, wenn der Zeiger J1D dem 2. Bereich zugeordnet ist. In dem anderen Fall, wenn der Zeiger J1D dem 3. Bereich (Bereichskennung B = 2) zugeordnet ist, wird keine Erhöhung des Lesezählers vorgenommen. Durch Nichtzählen wird nämlich auf den ersten Bereich korrigiert. Wenn der Zeiger J1D ungleich 1 ist, wird der Modulo-64-Lesezähler VC4RC inkrementiert. Als Ausgangsdaten werden dann die Pufferspeicherdaten geliefert.

Als nächstes wird überprüft, ob ein VC-3 eines Bereiches in einer AU-3 vorkommt. Diese Information wird ebenfalls vom Managementspeicher des Systemmanagements geliefert. Falls der VC-3 in einer AU-3 vorliegt, wird überprüft, ob die Pointerkennzeichnung H1 gleich 1 ist. Ist dies der Fall, wird als Ausgangsdatenbyte das von der Sende-Pointerschaltung gelieferte H1-Byte genommen. Im anderen Fall wird überprüft, ob die Pointerkennzeichnung H2 gleich 1 ist. Wenn das bejaht wird, wird als Ausgangsdatenbyte das H2-Byte von der Sende-Pointerschaltung 15 verwendet. Ist die Pointerkennzeichnung H2 ungleich 1, wird zu einer Hilfsroutine (Anhang C) gesprungen.

Hier wird zuerst überprüft (Hilfsroutine), ob a) der Zeiger AUDAT gleich 1 ist und ob keine positive Stopfaktion vorliegt oder b) eine negative Stopfaktion vorliegt. Bei einer Bejahung wird ein AU-3-Spaltenzähler AU3S(B) inkrementiert. Bei einem Zählerstand von 87 des AU-3-Spaltenzählers AU3S(B) wird dieser gleich 0 gesetzt. Dieser AU-3-Spaltenzähler AU3S(B) kennzeichnet eine Spalte in einer AU-3 (vergl. hierzu Fig. 2.3/G709). Zur Feststellung, ob feste Stopfstellen vorliegen, wird überprüft, ob der AU3-Spaltenzähler AU3S(B) gleich 29 oder gleich 58 ist. Ist das nicht der Fall, wird ein Lesebefehl erzeugt und der Lesezähler VC3RC(B) wird inkrementiert. Bei dem Wert 32 wird der Lesezähler VC3RC(B) gleich 0 gesetzt. Dann wird das Datenbyte des Pufferspeichers 13 als Ausgangsdatenbyte verwendet. Zum Schluß der Hilfsroutine wird überprüft, ob der Zeiger J1D gleich 1 ist. Ist dies der Fall, wird der AU-3-Spaltenzähler AU3S(B) gleich 0 gesetzt (Initialisierung). Damit ist die Hilfsroutine beendet.

Als nächstes wird im Zustandsablauf der Leseentscheidungsanordnung 20 mit Hilfe des Managementspeichers überprüft, ob eine TU-3 vorliegt. Ist das der Fall, wird gefragt, ob a) der Zeiger AUDAT gleich 1 und b) der Zeiger TU3D(B) gleich 1 und keine positive Stopfaktion vorliegt oder c) eine negative Stopfaktion vorliegt. Ist dies der Fall, wird ein Lesebefehl erzeugt und der Lesezähler VC3RC(B) wird um eine Einheit erhöht. Bei einem Zählerstand von 32 wird dieser Lesezähler VC3RC(B) gleich 0 gesetzt. Dann wird noch das aus dem Pufferspeicher 13 ausgelesene Datenbyte als Ausgangsdatenbyte ausgegeben. Wenn keine TU-3 vorliegt, wird überprüft, ob a) der Zeiger AUDAT gleich 1 und b) der Zeiger TUG2D(B) gleich 1 und c) die Pointerkennzeichnung V1 gleich 0 gesetzt ist und d) die Pointerkennzeichnung V2 gleich 0 gesetzt ist und e) die Pointerkennzeichnung V3 gleich 0 gesetzt ist oder eine negative Stopfaktion vorliegt und f) die Pointerkennzeichnung V3P gleich 0 gesetzt ist oder keine positive Stopfaktion vorliegt und g) die Pointerkennzeichnung V4 gleich 0 gesetzt ist. Ist diese Bedingung erfüllt, wird ein Lesebefehl erzeugt und ein Lesezähler LORC(PA) inkrementiert, der dem ausgelesenen Datenbyte zugeordnet ist. Ferner wird das Datenbyte als Ausgangsdatenbyte ausgegeben. Ein Lesezähler LORC(PA) ist ein Modulo-12-Zähler. Damit ist der Zustandsablauf der Leseentscheidunganordnung 20 beendet.

Zum Schluß wird der Zustandsablauf der Sende-Pointerschaltung 15 (Anhang D) beschrieben, die einen Adreßzwischenspeicher und einen Pointerspeicher enthält. Nach dem Start wird die von der Leseschaltung 16 gelieferte Pointeradresse PA in dem Adreßzwischenspeicher abgespeichert. Dann wird überprüft, ob eine Pointerkennzeichnung H1 oder V1 gleich 1 ist. Ist das der Fall, wird zu einer H1V1-Routine gesprungen. Ist das nicht der Fall, wird überprüft, ob die Pointerkennzeichnung H2 oder V2 gleich 1 ist. Wird dies bejaht, wird zu einer H2V2-Routine gesprungen. Bei einer Verneinung wird dann geprüft, ob die Pointerkennzeichnung H3 oder V3 gleich 1 ist. Ist dies der Fall, wird zu einer H3V3-Routine gesprungen. Ist die Pointerkennzeichnung H3 oder V3 nicht gleich 1, wird abgefragt, ob der Zeiger J1D gleich 1 ist, d.h. ob ein J1- oder V5-Byte dem entsprechenden Datenbyte aus dem Pufferspeicher 13 zugeordnet ist. Ist das nicht der Fall wird zum Ende des Programm- bzw. Zustandsablauf der Sende-Pointerschaltung 15 gesprungen. Im anderen Fall wird der Wert des Positionszeigers TUPOS als Pointerwert $P_{akt}(PA,n)$ im Pointerspeicher gespeichert. Damit ist der Zustandsablauf der Sende-Pointerschaltung 15 beendet.

Im folgenden wird die H1V1-Routine (Anhang D) beschrieben. Nach dem Start wird zuerst überprüft, ob gestopft werden soll. Diese Information wird von der hier nicht näher dargestellten Stopfentscheidungsschaltung geliefert. Wird das verneint, wird ein H1- oder V1-Byte mit dem Pointerwert gebildet und zum Ende der H1V1-Routine gesprungen. Im anderen Fall, wenn gestopft werden soll, wird die Stopfinformation im Pointerspeicher gespeichert und überprüft, ob positiv gestopft werden soll. Dann wird ein H1- oder V1-Byte mit dem Pointerwert mit einem invertierten I-Bit gebildet und zum Ende der Routine gesprungen. Wenn negativ gestopft werden soll, wird das H1- oder V1-Byte mit dem Pointerwert mit einem invertierten D-Bit gebildet.

In der H2V2-Routine (Anhang D) wird die Bildung eines H2- oder V2-Bytes beschrieben. Nach dem Start wird überprüft, ob gestopft werden soll. Ist das nicht der Fall, wird das H2- oder V2-Byte aus dem Pointerwert gebildet. Im anderen Fall wird bei einer positiven Stopfung das H2- oder V2-Byte aus dem Pointerwert mit invertierten I-Bits gebildet. Bei einer negativen Stopfung wird das H2- oder V2-Byte aus dem Pointerwert mit invertierten D-Bits gebildet. Damit ist die H2V2-Routine beendet.

Nach dem Start der H3V3-Routine (Anhang D) wird zuerst überprüft, ob die Pointerkennzeichnung H3 gleich 1 ist. Wenn das der Fall ist, wird überprüft, ob gestopft werden soll. Wenn gestopft werden soll, wird gefragt, ob positiv gestopft werden soll. Bei einer Bejahung, wird überprüft, ob der Pointerwert $P_{akt}(PA,n-1)$ gleich 782 ist. Ist dies der Fall, wird der Pointerwert $P_{akt}(PA,n)$ gleich 0 gesetzt. Im anderen Fall wird der Pointerwert inkrementiert ($P_{akt}(PA,n) := P_{akt}(PA,n-1) + 1$). Bei einer negativen Stopfung wird gefragt, ob der Pointerwert $P_{akt}(PA,n-1)$ gleich 0 ist. Ist dies der Fall, wird der Pointerwert $P_{akt}(PA,n)$ gleich 782 gesetzt. Im anderen Fall wird der Pointerwert dekrementiert ($P_{akt}(PA,n) := P_{akt}(PA,n-1)-1$). Wenn die Pointerkennzeichnung H3 ungleich 1 ist, liegt die Stelle für das V3-Byte vor. Wenn gestopft werden soll, wird bei einer positiven Stopfaktion zur Kennungsroutine 1 (Anhang B) und bei einer negativen Stopfaktion zur Kennungspoutine 2 (Anhang B) gesprungen. Diese beiden Kennungsroutinen 1 und 2 sind schon jeweils bei der Erläuterung der Empfangs-Pointerschaltung 5 beschrieben worden. Zum Schluß wird der aktuelle Pointerwert $P_{akt}(PA,n)$ im Pointerspeicher gespeichert. Damit ist die H3V3-Routine beendet.

Anhang A:

Empfangs-Zähleranordnung 6:

Start:

DAT=1?

nein: zurück zum Start

ja:     Liegt J1-Kennzeichnung vor?

        ja:     Liegt Verwaltungseinheit AU-4 vor?

                ja:     Setze Bereich B:=0,1,2:

                        Sprung zur Initialisierungsroutine

                nein: Sprung zur Initialisierungsroutine

        nein: Liegt Verwaltungseinheit AU-4 vor?

                ja:     Sprung zur Zählerroutine 1

                nein: Sprung zur Zählerroutine 2

Ende:


Initialisierungsroutine:

Start:

Spaltenzähler AUS(B):=0

Zeilenzähler AUZ(B):=0

Zähler TUG2(B):=6

Zähler TU11(B):=3

Zähler TU12(B):=2

Positionszähler TU3POS(B):=594

$H4_{akt}(B,n)=0$?

ja:     Positionszähler TU2POS(B):=320

        Positionszähler TU12POS(B):=104

        Positionszähler TU11POS(B):=77

Ende:


Zählerroutine 1:

Start:

Spaltenzähler AUS(B)=86?

ja:     Spaltenzähler AUS(B):=0

        Zeilenzähler AUZ(B):=AUZ(B)+1 MOD 9

```
nein: Spaltenzähler AUS(B):=AUS(B)+1
Spaltenzähler AUS(B)>1?
nein: TU-Zeiger TU3D(B):=0
ja:   TU-Zeiger TU3D(B):=1
      Positionszähler TU3POS(B):=TU3POS(B)+1 MOD 765
Spaltenzähler AUS(B)=1?
nein: Pointerzeiger H1TU3(B), H2TU3(B), H3TU3(B):=0
      Spaltenzähler AUS(B)=2 und Zeilenzähler AUZ(B)=2?
      nein: Pointerzeiger H3TU3P(B):=0
      ja:   Pointerzeiger H3TU3P(B):=1
ja:   Zeilenzähler AUZ(B)=0?
      ja:   Pointerzeiger H1TU3(B):=1
      nein: Zeilenzähler AUZ(B)=1?
            ja:   Pointerzeiger H2TU3(B):=1
            nein: Zeilenzähler AUZ(B)=2?
                  ja:   Pointerzeiger H3TU3(B):=1
Spaltenzähler AUS(B)>2?
nein: TU-Zeiger TUG2D(B):=0
ja:   TU-Zeiger TUG2D(B):=1
      Zähler TUG2(B)=6?
      nein: Zähler TUG2(B):=TUG2(B)+1
      ja:   Zähler TUG2(B):=0
            Spaltenzähler AUS(B)<10 und Zeilenzähler
            AUZ(B)=0?
            ja:   Pointerzeiger VTU2(B):=1
            nein: Pointerzeiger VTU2(B):=0
                  Positionszähler
                  TU2POS(B):=TU2POS(B)+1 MOD 428
                  Spaltenzähler AUS(B)<17 und Zeilenzähler
                  AUZ(B)=0?
                  nein: Pointerzeiger VTU2P(B):=0
                  ja:   Pointerzeiger VTU2P(B):=1
Spaltenzähler AUS(B)>2 und Zähler TUG2(B)=0?
nein: Sprung zur Marke 11
ja:   Zähler TU11(B)=3?
```

24

```
       nein: Zähler TU11(B):=TU11(B)+1
       ja:    Zähler TU11(B):=0
              Spaltenzähler AUS(B)<31 und Zeilenzähler
              AUZ(B)=0?
              ja:    Pointerzeiger VTU11(B):=1
              nein: Pointerzeiger VTU11(B):=0
                    Positionszähler
                    TU11POS(B):=TU11POS(B)+1 MOD 104
                    Spaltenzähler AUS(B)<59 und Zeilenzähler
                    AUZ(B)=0?
                    ja:    Pointerzeiger VTU11P(B):=1
                    nein: Pointerzeiger VTU11P(B):=0

Marke 11:
Spaltenzähler AUS(B)>2 und Zähler TUG2(B)=0?
ja:    Zähler TU12(B)=2?
       nein: Zähler TU12(B):=TU12(B)+1
       ja:    Zähler TU12(B):=0
              Spaltenzähler AUS(B)<24 und Zeilenzähler
              AUZ(B)=0?
              ja:    Pointerzeiger VTU12(B):=1
              nein: Pointerzeiger VTU12(B):=0
                    Positionszähler
                    TU12POS(B):=TU12POS(B)+1 MOD 140
                    Spaltenzähler AUS(B)<45 und Zeilenzähler
                    AUZ(B)=0?
                    ja:    Pointerzeiger VTU12P(B):=1
                    nein: Pointerzeiger VTU12P(B):=0
Ende:


Zählerroutine 2:

Start:
Spaltenzähler AUS(B)=86?
ja:    Spaltenzähler AUS(B):=0
       Zeilenzähler AUZ(B):=AUZ(B)+1 MOD 9
nein: Spaltenzähler AUS(B):=AUS(B)+1
```

```
Spaltenzähler AUS(B)=0 oder AUS(B)=29 oder AUS(B)=58?
ja:    TU-Zeiger TUG2D(B):=0
nein:  TU-Zeiger TUG2D(B):=1
       Zähler TUG2(B)=6?
       nein: Zähler TUG2(B):=TUG2(B)+1
       ja:   Zähler TUG2(B):=0
             Spaltenzähler AUS(B)>7?
             nein: Pointerzeiger VTU2(B):=1
             ja:   Pointerzeiger VTU2(B):=0
                   Positionszähler
                   TU2POS(B):=TU2POS(B)+1 MOD 428
                   Spaltenzähler AUS(B)>14?
                   nein: Pointerzeiger VTU2P(B):=1
                   ja:   Pointerzeiger VTU2P(B):=0
Zähler TUG2(B)=0?
nein: Sprung zur Marke 12
ja:   Zähler TU11(B)=3?
      nein: Zähler TU11(B):=TU11(B)+1
      ja:   Zähler TU11(B):=0
            Spaltenzähler AUS(B)>28?
            nein: Pointerzeiger VTU11(B):=1
            ja:   Pointerzeiger VTU11(B):=0
                  Positionszähler
                  TU11POS(B):=TU11POS(B)+1 MOD 104
                  Spaltenzähler AUS(B)>57?
                  ja:   Pointerzeiger VTU11P(B):=0
                  nein: Pointerzeiger VTU11P(B):=1
Marke 12:
Zähler TUG2(B)=0?
ja:   Zähler TU12(B)=2?
      nein: Zähler TU12(B):=TU12(B)+1
      ja:   Zähler TU12(B):=0
            Spaltenzähler AUS(B)>21?
            nein: Pointerzeiger VTU12(B):=1
            ja:   Pointerzeiger VTU12(B):=0
```

Positionszähler

TU12POS(B):=TU12POS(B)+1 MOD 140

Spaltenzähler AUS(B)<43?

    ja:   Pointerzeiger VTU12P(B):=1

    nein: Pointerzeiger VTU12P(B):=0

Ende:


<u>Empfangs-Adressierungsanordnung 7:</u>

Start:

TU-Kennung:=0

Liegt eine VC-4 vor?

ja:   Pufferspeicheradresse PS:=Schreibzähler VC4SC

     Pointeradresse PA:="00111BB"

nein: Liegt eine VC-3 in einer AU-3 vor?

     ja:   Pufferspeicheradresse PS:=Schreibzähler

         VC3SC(B)

         Pointeradresse PA:="00111BB"

     nein: Liegt eine VC-3 in einer AU-4 vor?

         ja:   Pufferspeicheradresse PS:=Schreibzähler

             VC3SC(B)

             Pointeradresse PA:="BB00000"

         nein: Gehe zur TUG-2-Adreß-Routine

Liegt TU-3 vor?

ja:   TU-Kennung:=4

     Pointerkennzeichnung V1:=H1TU3(B), V2:=H2TU3(B),

     V3:=H3TU3(B), V3P:=H3TU3P(B), V4:=0 und Positions-

     zeiger TUPOS:=TU3POS(B)

nein: Liegt VC-3 in AU-3 oder VC-4 in AU-4 vor?

     ja:   Pointerkennzeichnung V1:=0, V2:=0, V3:=0,

         V3P:=0, V4:=0

     nein: Liegt TU-11 vor?

         ja:   TU-Kennung:=3

             Zeiger V:=VTU11(B), VP:=VTU11P(B),

             TUPOS:=TU11POS(B)

         nein: Liegt TU-12 vor?

```
        ja:   TU-Kennung:=2
              Zeiger V:=VTU12(B), VP:=VTU12P(B),
              TUPOS:=TU12POS(B)
        nein: TU-Kennung:=0
              Zeiger V:=VTU2(B), VP:=VTU2P(B),
              TUPOS:=TU2POS(B)
```

$H4_{akt}(B,n)=0$?

```
ja:   Pointerkennzeichnung V1:=V, V2:=0,
      V3:=0, V3P:=0, V4:=0
```

nein: $H4_{akt}(B,n)=1$?

```
      ja:   Pointerkennzeichnung V1:=0, V2:=V,
            V3:=0, V3P:=0, V4:=0
```

nein: $H4_{akt}(B,n)=2$?

```
            ja:   Pointerkennzeichnung V1:=0,
                  V2:=0, V3:=V, V3P:=VP, V4:=0
            nein: Pointerkennzeichnung V1:=0,
                  V2:=0, V3:=0, V3P:=0, V4:=V
```

Ende:


**Empfangs-TUG2-Adreß-Routine:**

Start:

Zwischenadresse ZW:="BBTTT"

Liegt TU-2 vor?

ja:   Pointeradresse PA:=ZW/"00"

nein: Liegt TU-12 vor?

```
      ja:   Pointeradresse PA:=ZW/TU12(B)
      nein: Pointeradresse PA:=ZW/TU11(B)
```

Pufferspeicheradresse PS:=PA/Schreibzähler LOSC(PA).

Ende:


**Schreibentscheidungsanordnung 9:**

Start:

Liegt AU-4 mit VC-4 vor?

ja:   Liegt J1-Kennzeichnung vor?

```
      ja:   Zeiger J1D:=1
```

```
            nein: Zeiger J1D:=0
            DAT=1?
            ja:    Erzeugung des Schreibbefehls
      nein: Liegt AU-3 mit VC-3 eines Bereiches vor?
            ja:    Liegt J1-Kennzeichnung vor?
                   ja:   Zeiger J1D:=1
                   nein: Zeiger J1D:=0
                   Ist DAT=1 und Spaltenzähler AUS(B)≠29 und ≠58?
                   ja:    Erzeugung des Schreibbefehls
            nein: Ist TUPOS=Pointerwert?
                   ja:   Zeiger J1D:=1
                   nein: Zeiger J1D:=0
                   Liegt TU-3 vor?
                   ja:   a) Ist DAT=1 und
                         b) ist TU3D(B)=1 gesetzt und
                         c) liegt keine positive Stopfaktion vor
                            oder
                         d) liegt eine negative Stopfaktion vor?
                         ja:   Erzeugung des Schreibbefehls
                   nein: a) Ist DAT=1 und
                         b) ist TUG2D(B)=1 gesetzt und
                         c) ist V1=0 gesetzt und
                         d) ist V2=0 gesetzt und
                         e) ist V3=0 gesetzt oder liegt eine ne-
                            gative Stopfaktion vor und
                         f) ist V3P=0 gesetzt oder liegt keine
                            positive Stopfaktion vor und
                         g) ist V4=0 gesetzt?
                         ja:   Erzeugung des Schreibbefehls
      Liegt Schreibbefehl vor?
      ja:   Schreibzähler VC4SC:=VC4SC+1 MOD 64
            Schreibzähler VC3SC(B):=VC3SC(B)+1 MOD 32
            Schreibzähler LOSC(PA):=LOSC(PA)+1 MOD 12
            Datenbyte und Zeiger J1D in Pufferspeicher
Ende:
```

H4-Anordnung 8:

Start:

Spaltenzähler AUS(B)=0 und Zeilenzähler AUZ(B)=5 und DAT=1?

ja:    Liegt AU-4 vor?

      ja:    Setze $B:=0,1,2$:

      Ermittlung des H4-Wertes aus den beiden niederwertigsten Bits des H4-Bytes;

      Speicherung des H4-Wertes in H4-Speicher;

      Ist der neu empfangene H4-Wert $H4_{neu}(B,n)$ gleich dem aktuellen H4-Wert $H4_{akt}(B,n-1)+1$?

      ja:    $H4_{akt}(B,n):=H4_{neu}(B,n)$

      nein: Bildet der neu empfangene H4-Wert $H4_{neu}(B,n)$ zusammen mit den davor empfangenen vier letzten H4-Werten $H4_{neu}(B,n-i)$, $i=1,\ldots,4$, eine Sequenz?

           ja:    $H4_{akt}(B,n):=H4_{neu}(B,n)$

           nein: $H4_{akt}(B,n):=H4_{akt}(B,n-1)+1$

Ende:

## Anhang B:

### Empfangs-Pointerschaltung 5:

### AU-Pointerzähler 11:

Start:

Liegt AU-Pointer-Kennung vor?

ja:    AU-Pointerzähler AUPO:=0

nein: AU-Pointerzähler AUPO=12?

     nein: AU-Pointerzähler AUPO:=AUPO+1

     ja:    keine Veränderung des Inhaltes des

          AU-Pointerzählers AUPO

Ende:

### AU-Positionszähler 12:

Start:

Liegt ein Sperrsignal vor?

nein: DAT:=1

     Liegt erster Bereich vor (B=0)?

     ja:    AU-Positionszähler AUVC:=AUVC+1

     nein: Keine Änderung des Inhaltes des AU-Positions-

          zählers AUVC

ja:    DAT:=0

     Liegt die erste positive Stopfstelle vor?

     ja:    AU-Positionszähler AUVC:=0

     nein: Keine Änderung des Inhaltes des AU-Positions-

          zählers AUVC

Ende:

### Hauptanordnung 10:

Start:

Abspeicherung der Pointeradresse PA in einem

Adreßzwischenspeicher;

Liegt ein H1-, H2-, V1- oder V2-Byte vor?

ja:    Liegt H1- oder V1-Byte vor?

ja: Zwischenspeicherung des H1- oder V1-Bytes im H1V1-Speicher;

nein: Sprung zur Auswerteroutine

Speichere den aktuellen Pointerwert $P_{akt}(PA,n)$ und den neuen Pointerwert $P(PA,n)$ und Stopfinformation im Pointerspeicher;

nein: Liegt H3-Byte vor?

ja: Liegt eine negative Stopfstelle vor?

nein: DAT:=0

Sprung zum Ende

ja: DAT:=1

Sprung zur Marke 21

nein: Liegt eine Stopfstelle für Verwaltungseinheit AU-3 oder AU-4 vor?

nein: Sprung zur Marke 21

ja: Liegt positive Stopfstelle vor?

ja: DAT:=0

Sprung zum Ende

Marke 21:

Ausgabe vom Pointerwert $P_{akt}(PA,n)$ für TU-3, TU-2, TU-12, TU-11 und Stopfinformation aus Pointerspeicher an Schreibschaltung 4;

Ist der aus dem Pointerspeicher ausgelesene Pointerwert $P_{akt}(PA,n)$ für AU-4, AU-3 gleich dem Inhalt des Positionszählers AUVC?

ja: Ausgabe der J1-Kennzeichnung

Liegt V3-Byte vor und STOPFDAT=1?

ja: Liegt positive Stopfaktion vor?

ja: Sprung zur Kennungsroutine 1

Speicherung des aktuellen Pointerwertes $P_{akt}(PA,n)$ in Pointerspeicher;

nein: Liegt negative Stopfaktion vor?

nein: Sprung zum Ende

ja: Sprung zur Kennungsroutine 2

32

Speicherung des aktuellen Pointerwertes $P_{akt}(PA,n)$ in Pointerspeicher;

Ende:


Auswerteroutine:

Start:

Eingabe des H1- oder V1-Bytes aus H1V1-Speicher, des neu
empfangenen H2- oder V2-Bytes, des zuletzt empfangenen
Pointerwertes $P(PA,n-1)$ und des aktuellen Pointerwertes
$P_{akt}(PA,n-1)$ aus Pointerspeicher;

Pointerzähler PZ:=PZ+1;

STOPFDAT:=1

Ist der neu empfangene Pointerwert $P(PA,n)$ gleich dem zuletzt empfangenen Pointerwert $P(PA,n-1)$?

ja:　　Ist der aktuelle Pointerwert $P_{akt}(PA,n-1)$ gleich dem
　　　　neuen Pointerwert $P(PA,n)$?

　　　ja:　Pointerzähler PZ:=0

　　　nein: STOPFDAT:=0

　　　　　Pointerzähler PZ=3?

　　　　　nein: $P_{akt}(PA,n):=P_{akt}(PA,n-1)$

　　　　　ja:　 $P_{akt}(PA,n):=P(PA,n)$

nein: Pointerzähler PZ:=1

Soll eine Stopfaktion durchgeführt werden und STOPFDAT=1?

ja:　Stopfzähler SZ:=3?

　　　ja:　Liegt H2-Byte vor?

　　　　　ja:　Liegt positive Stopfaktion vor?

　　　　　　　ja:　Pointerwert $P_{akt}(PA,n-1)=782$?

　　　　　　　　　ja:　 $P_{akt}(PA,n):=0$

　　　　　　　　　nein: $P_{akt}(PA,n):=P_{akt}(PA,n-1)+1$

　　　　　nein: Liegt negative Stopfaktion vor?

　　　　　　　ja:　Pointerwert $P_{akt}(PA,n-1)=0$?

　　　　　　　　　ja:　 $P_{akt}(PA,n):=782$

　　　　　　　　　nein: $P_{akt}(PA,n):=$
　　　　　　　　　　　 $P_{akt}(PA,n-1)-1$

```
            nein:  P_akt(PA,n):=P_akt(PA,n-1)
                   Stopfzähler SZ:=0
         nein:  keine Stopfaktion durchführen
                Stopfzähler SZ:=0
nein:  Stopfzähler SZ=3?
       ja:    Stopfzähler SZ:=SZ
       nein:  Stopfzähler SZ:=SZ+1
Ende:
```

Kennungsroutine 1:

```
Start:
TU-Kennung=4?
ja:    Pointerwert P_akt(PA,n-1)=764?
       ja:    Pointerwert P_akt(PA,n):=0
       nein:  Pointerwert P_akt(PA,n):=P_akt(PA,n-1)+1
TU-Kennung=0?
ja:    Pointerwert P_akt(PA,n-1)=427?
       ja:    Pointerwert P_akt(PA,n):=0
       nein:  Pointerwert P_akt(PA,n):=P_akt(PA,n-1)+1
TU-Kennung=2?
ja:    Pointerwert P_akt(PA,n-1)=139?
       ja:    Pointerwert P_akt(PA,n):=0
       nein:  Pointerwert P_akt(PA,n):=P_akt(PA,n-1)+1
TU-Kennung=3?
ja:    Pointerwert P_akt(PA,n-1)=103?
       ja:    Pointerwert P_akt(PA,n):=0
       nein:  Pointerwert P_akt(PA,n):=P_akt(PA,n-1)+1
Ende:
```

Kennungsroutine 2:

```
Start:
TU-Kennung=4?
ja:    Pointerwert P_akt(PA,n-1)=0?
       ja:    Pointerwert P_akt(PA,n):=764
       nein:  Pointerwert P_akt(PA,n):=P_akt(PA,n-1)-1
```

TU-Kennung=0?

ja:    Pointerwert $P_{akt}(PA,n-1)=0$?

      ja:    Pointerwert $P_{akt}(PA,n):=427$

      nein: Pointerwert $P_{akt}(PA,n):=P_{akt}(PA,n-1)-1$

TU-Kennung=2?

ja:    Pointerwert $P_{akt}(PA,n-1)=0$?

      ja:    Pointerwert $P_{akt}(PA,n):=139$

      nein: Pointerwert $P_{akt}(PA,n):=P_{akt}(PA,n-1)-1$

TU-Kennung=3?

ja:    Pointerwert $P_{akt}(PA,n-1)=0$?

      ja:    Pointerwert $P_{akt}(PA,n):=103$

      nein: Pointerwert $P_{akt}(PA,n):=P_{akt}(PA,n-1)-1$

Anhang C:

Sende-Rahmenzähleranordnung 19:

Start:

Liegt Start-Kennzeichen vor?

ja:     STM-Spaltenzähler STMS:=0

        STM-Zeilenzähler STMZ:=0

        Bereichszähler B:=0

        Positionszähler AUPOS:=521

        $H4_{akt}(B,n):=H4_{akt}(B,n-1)+1$ MOD 4

nein:   STM-Spaltenzähler STMS:=STMS+1 MOD 270

        STM-Spaltenzähler STMS=0?

        ja:     STM-Zeilenzähler STMZ:=STMZ+1 MOD 9

        Bereichszähler B:=B+1 MOD 3

STM-Zeilenzähler STMZ=3?

ja:     STM-Spaltenzähler STMS=0, 1 oder 2?

        ja:     Pointerkennzeichnung H1:=1

        nein:   Pointerkennzeichnung H1:=0

        STM-Spaltenzähler STMS=3, 4 oder 5?

        ja:     Pointerkennzeichnung H2:=1

        nein:   Pointerkennzeichnung H2:=0

        STM-Spaltenzähler STMS=6, 7 oder 8?

        ja:     Pointerkennzeichnung H3:=1

        nein:   Pointerkennzeichnung H3:=0

        STM-Spaltenzähler STMS=9, 10 oder 11?

        ja:     Pointerkennzeichnung H3P:=1

        nein:   Pointerkennzeichnung H3P:=0

STM-Spaltenzähler STMS > 8?

ja:     Zeiger AUDAT:=1

nein:   Zeiger AUDAT:=0

AUDAT=1 und Bereichszähler B=0?

ja:     Positionszähler AUPOS:=AUPOS+1 MOD 783

Ende:

Sende-Zähleranordnung 17:

Start:

AUDAT=1?

nein: zurück zum Start

ja: STM-Spaltenzähler STMS=9 und STM-Zeilenzähler STMZ=3?

    ja: Sprung zur Initialisierungsroutine

    nein: Bereichszähler B=0 vor?

        ja: Liegt Verwaltungseinheit AU-4 vor?

            ja: Sprung zur Zählerroutine 1

            nein: Sprung zur Zählerroutine 2

        nein: zurück zum Start;

Ende:

Sende-Adressierungsanordnung 18:

Start:

TU-Kennung:=0

Liegt ein VC-4 vor?

ja: Pufferspeicheradresse PS:=Lesezähler VC4RC
Pointeradresse PA:="00111BB"

nein: Liegt eine VC-3 in einer AU-3 vor?

    ja: Pufferspeicheradresse PS:=Lesezähler VC3RC(B)
        Pointeradresse PA:="00111BB"

    nein: Liegt eine VC-3 in einer AU-4 vor?

        ja: Pufferspeicheradresse PS:=Lesezähler
            VC3RC(B)

            Pointeradresse PA="BB00000"

        nein: Gehe zur Sende-TUG-2-Adreß-Routine

Liegt TU-3 vor?

ja: TU-Kennung:=4
Pointerkennzeichnung V1:=H1TU3(B), V2:=H2TU3(B),
V3:=H3TU3(B), V3P:=H3TU3P(B), V4:=0
und Positionszeiger TUPOS:=TU3POS(B)

nein: Liegt VC-3 in AU-3 oder VC-4 in AU-4 vor?

37

```
    ja:   Pointerkennzeichnung V1:=H1, V2:=H2, V3:=H3,
          V3P:=H3P, V4:=0 und TUPOS:= AUPOS
  nein: Liegt TU-11 vor?
          ja:   TU-Kennung:=3
                Zeiger V:=VTU11(B), VP:=VTU11P(B),
                TUPOS:=TU11POS(B)
          nein: Liegt TU-12 vor?
                  ja:   TU-Kennung:=2
                        Zeiger V:=VTU12(B), VP:=VTU12P(B),
                        TUPOS:=TU12POS(B)
                  nein: TU-Kennung:=0
                        Zeiger V:=VTU2(B), VP:=VTU2P(B),
                        TUPOS:=TU2POS(B)
```

$H4_{akt}(B,n)=0$?

```
  ja:   Pointerkennzeichnung V1:=V, V2:=0,
        V3:=0, V3P:=0, V4:=0
```

nein: $H4_{akt}(B,n)=1$?

```
        ja:   Pointerkennzeichnung V1:=0, V2:=V,
              V3:=0, V3P:=0, V4:=0
        nein:
```

$H4_{akt}(B,n)=2$?

```
              ja:   Pointerkennzeichnung V1:=0,
                    V2:=0, V3:=V, V3P:=VP, V4:=0
              nein: Pointerkennzeichnung V1:=0,
                    V2:=0, V3:=0, V3P:=0, V4:=V
```

Ende:

Sende-TUG2-Adreß-Routine:

Start:

Zwischenadresse ZW:="BBTTT"

Liegt TU-2 vor?

ja:    Pointeradresse PA:=ZW/"00"

nein: Liegt TU-12 vor?

        ja:    Pointeradresse PA:=ZW/TU12(B)

        nein: Pointeradresse PA:=ZW/TU11(B)

Pufferspeicheradresse PS:=PA/Lesezähler LORC(PA)

Ende:


Leseentscheidungsanordnung 20:

Start:

Liegt AU-4 mit VC-4 vor?

ja:    Bereichskennung B=0?

        ja:    Pointerkennzeichnung H1=1?

                ja:    Ausgangsdaten:=H1-Byte

                nein: Pointerkennzeichnung H2=1?

                        ja:    Ausgangsdaten:=H2-Byte

                        nein: a) Ist AUDAT=1 und liegt keine

                                positive Stopfaktion oder

                              b) liegt eine negative Stopfaktion

                                vor?

                                ja:    Erzeugung des Lesebefehls

        nein: Pointerkennzeichnung H1=1?

                ja:    Ausgangsdaten:=Festwerte

                nein: Pointerkennzeichnung H2=1?

                        ja:    Ausgangsdaten:=Festwerte

        Liegt Lesebefehl vor?

        ja:    J1D=1?

                ja:    Bereichskennung B=0?

                        ja:    Lesezähler VC4RC:=VC4RC+1 MOD 64

                        nein: Bereichskennung B=1?

                                ja:    Lesezähler

                                        VC4RC:=VC4RC+2 MOD 64

```
            nein: Lesezähler VC4RC:=VC4RC+1 MOD 64
            Ausgangsdaten=Pufferspeicherdaten
nein: Liegt AU-3 mit VC-3 eines Bereiches vor?
    ja:    Pointerkennzeichnung H1=1?
        ja:    Ausgangsdaten:=H1-Byte
        nein: Pointerkennzeichnung H2=1?
                ja:    Ausgangsdaten:=H2-Byte
                nein: Sprung zur Hilfsroutine
    nein: Liegt TU-3 vor?
        ja:    a) Ist AUDAT=1 und
                b) Ist TU3D(B)=1 und liegt keine positi-
                   ve Stopfaktion oder
                c) Liegt eine negative Stopfaktion vor?
                ja:    Erzeugung des Lesebefehls
                       Lesezähler
                       VC3RC(B):=VC3RC(B)+1 MOD 32
                       Ausgangsdaten:=Pufferdaten
        nein: a) Ist AUDAT=1 und
                b) Ist TUG2D(B)=1 und
                c) Ist V1=0 gesetzt und
                d) Ist V2=0 gesetzt und
                e) Ist V3=0 gesetzt oder liegt eine
                   negative Stopfaktion und
                f) Ist V3P=0 gesetzt oder liegt keine
                   positive Stopfaktion und
                g) ist V4=0 gesetzt?
                ja:    Erzeugung des Lesebefehls
                       Lesezähler
                       LORC(PA):=LORC(PA)+1 MOD 12
                       Ausgangsdaten:=Pufferspeicherdaten
Ende:
```

<u>Hilfsroutine:</u>

Start:

a) Ist AUDAT=1 und liegt keine positive Stopfaktion vor

   oder

b) Liegt eine negative Stopfaktion vor?

ja:   AU-3-Spaltenzähler AU3S(B):=AU3S(B)+1 MOD 87

       AU-3-Spaltenzähler AU3S(B)=29 oder AU3S(B)=58?

       nein: Erzeugung eines Lesebefehls

            Lesezähler VC3RC(B):=VC3RC(B)+1 MOD 32

            Ausgangsdaten:=Pufferspeicherdaten

            J1D=1?

            ja:   AU-3-Spaltenzähler AU3S(B)=0

nein: Sprung zum Ende der Leseentscheidungsanordnung

Ende:

## Anhang D:

### Sende-Pointerschaltung 15:

Start:

Abspeicherung der Pointeradresse PA in einem
Adreßzwischenspeicher

Pointerkennzeichnung H1=1 oder V1=1?

ja:    Sprung zur H1V1-Routine

nein: Pointerkennzeichnung H2=1 oder V2=1?

      ja:    Sprung zur H2V2-Routine

      nein: Pointerkennzeichnung H3=1 oder V3=1?

            ja:    Sprung zur H3V3-Routine

            nein: J1D=1?

                  ja:    Speicherung des Wertes des Positionszeigers als Pointerwert $P_{akt}(PA,n)$ im Pointerspeicher

Ende:

### H1V1-Routine:

Start:

Soll gestopft werden?

nein: Bildung von H1- oder V1-Byte mit dem Pointerwert
      Sprung zum Ende

ja:    Speicherung der Stopfinformation im Pointerspeicher
      Soll positiv gestopft werden?

      ja:    Bildung von H1- oder V1-Byte mit dem Pointerwert mit einem invertierten I-Bit;
            Sprung zum Ende

      nein: Bildung von H1- oder V1-Byte mit dem Pointerwert mit einem invertierten D-Bit;

Ende:

**H2V2-Routine:**

Start:

Soll gestopft werden?

nein: Bildung von H2- oder V2-Byte aus dem Pointerwert
      Sprung zum Ende

ja:   Soll positiv gestopft werden?

      ja:   Bildung von H2- oder V2-Byte aus dem Pointerwert mit invertierten I-Bits;
            Sprung zum Ende

      nein: Bildung von H2- oder V2-Byte aus dem Pointerwert mit invertierten D-Bits;

Ende:


**H3V3-Routine:**

Start:

Pointerkennzeichnung H3=1?

ja:   Soll gestopft werden?

      ja:   Soll positiv gestopft werden?

            ja:   Pointerwert $P_{akt}(PA,n-1)=782$?

                  ja:   Pointerwert $P_{akt}(PA,n):=0$

                  nein: Pointerwert
                        $P_{akt}(PA,n):=P_{akt}(PA,n-1)+1$

            nein: Pointerwert $P_{akt}(PA,n-1)=0$?

                  ja:   Pointerwert $P_{akt}(PA,n):=782$

                  nein: Pointerwert
                        $P_{akt}(PA,n):=P_{akt}(PA,n-1)-1$

nein: Soll gestopft werden?

      ja:   Soll positiv gestopft werden?

            ja:   Sprung zur Kennungsroutine 1

            nein: Sprung zur Kennungsroutine 2

Speicherung des aktuellen Pointerwertes $P_{akt}(PA,n)$ in Pointerspeicher

Ende:


**Patentansprüche**

1. Synchrones Übertragungssystem mit einer Schaltungsanordnung zur Bestimmung der Datenbytes
   eines zu empfangenden oder zu bildenden Signals mit einer Steueranordnung (2, 14),
   die wenigstens einen Zähler (11, 19) zur Markierung der Pointerbytes jeder auftretbaren hochbitratigen
   Transporteinheit enthält,

EP 0 578 315 A1

die wenigstens einen Zähler (6, 17) zur Markierung der Datenbytes mit einem Zählerstand jeder auftretbaren hochbitratigen Transporteinheit enthält,

die für jede auftretbare Gruppe von niederbitratigen Transporteinheiten in jeder auftretbaren höchstbitratigen Transporteinheit wenigstens einen Positionszähler (6, 17) enthält, der zur Markierung der Datenbytes mit einem Zählerstand in einer niederbitratigen Transporteinheit der Gruppe vorgesehen ist, und

die anhand der Zählerstände und der Information über die Transporteinheiten des Signals wenigstens zur Kennzeichnung der Nutzdatenbytes und der Pointerbytes vorgesehen ist.

**2.** Synchrones Übertragungssystem nach Anspruch 1, dadurch gekennzeichnet,
daß die Steueranordnung (2, 14)
- zur Einschreibung oder Auslesung von Nutzdatenbytes eines Signals in einen oder aus einen Pufferspeicher (1, 13),
- zur Zuordnung jeweils eines Schreib- oder Lesezählers zu jeweils einer Transporteinheit des Signals,
- zur Bildung einer Pufferspeicheradresse wenigstens aus dem Zählerstand des dem Nutzdatenbyte zugeordneten Schreib- oder Lesezählers und
- zur Freigabe des Pufferspeichers (1, 13) bei Nutzdatenbytes vorgesehen ist.

**3.** Synchrones Übertragungssystem nach Anspruch 1 oder 2, dadurch gekennzeichnet,
daß die Steueranordnung (2, 14) zur Entnahme wenigstens von Pointerwerten aus den gekennzeichneten Pointerbytes oder zur Einfügung wenigstens von Pointerwerten in die gekennzeichneten Pointerbytes vorgesehen ist.

**4.** Synchrones Übertragungssystem nach Anspruch 2 oder 3, dadurch gekennzeichnet,
daß die Steueranordnung (2, 14) durch Auswertung der Zählerstände der Zähler
- zur Kennzeichnung der AU-Nutzdatenbytes und der AU-Pointerbytes,
- zur Zuordnung der AU-Nutzdatenbytes zu den einzelnen Transporteinheiten,
- zur Kennzeichnung der TU-Pointerbytes und
- zur Kennzeichnung der negativen Stopfstelle als Nutzdatenbyte bei Vorliegen einer negativen Stopfaktion und zur Aufhebung der Kennzeichnung der positiven Stopfstelle als Nutzdatenbyte bei Vorliegen einer positiven Stopfaktion vorgesehen ist.

**5.** Synchrones Übertragungssystem nach Anspruch 4, dadurch gekennzeichnet,
daß die Steueranordnung (2, 14) wenigstens einen zur Zählung der AU-Pointerbytes vorgesehenen Zähler (11, 19) enthält,
daß bei Erreichen bestimmter Zählerstände die Steueranordnung (2, 14) zur Bildung einer Pointerkennzeichnung für ein AU-Pointerbyte oder eine mögliche Stopfstelle vorgesehen ist.

**6.** Synchrones Übertragungssystem nach Anspruch 5, dadurch gekennzeichnet,
daß die Steueranordnung (2, 14) wenigstens eine zur Zählung der Datenbytes im AU-Nutzdatenbereich vorgesehene Zähleranordnung (6, 17) enthält und
daß durch Auswertung der Zählerstände der Zähleranordnung (6, 17) die Steueranordnung (2, 14) zur Bestimmung der Position der Datenbytes im AU-Nutzdatenbereich, zur Zuordnung der Datenbytes zu den TU-Transporteinheiten und zur Bildung einer Pointerkennzeichnung für ein TU-Pointerbyte oder eine mögliche Stopfstelle vorgesehen ist.

**7.** Synchrones Übertragungssystem nach Anspruch 6, dadurch gekennzeichnet,
daß die Zähleranordnung (6, 17)
- wenigstens jeweils einen Spaltenzähler zur Bestimmung der Spalte und wenigstens jeweils einen Zeilenzähler zur Bestimmung der Zeile in einer VC-4 oder VC-3,
- einen Positionszähler für wenigstens eine TU-3 zur Kennzeichnung der Nutzdatenbytes in einer TU-3,
- einen Zähler zur Kennzeichnung von TUG-2,
- wenigstens einen Zähler zur Kennzeichnung von TU-12 in wenigstens einer TUG-2,
- wenigstens einen Zähler zur Kennzeichnung von TU-11 in wenigstens einer TU-11 und
- jeweils wenigstens einen Positionszähler für jeweils wenigstens eine TU-2, eine TU-12 und eine TU-11 zur Kennzeichnung der Nutzdatenbytes in einer TU-2, einer TU-12 und einer TU-11

44

EP 0 578 315 A1

enthält.

**8.** Synchrones Übertragungssystem nach einem der Ansprüche 4 bis 7, dadurch gekennzeichnet, daß die Steueranordnung (2, 14) eine Adressierungsanordnung (7, 18) enthält, die

- bei Vorliegen eines VC-4 oder eines VC-3 die Bildung der Pufferspeicheradresse aus dem Zählerstand des jeweiligen zugeordneten Schreib- oder Lesezählers,
- bei Vorliegen einer TU-2 zur Bildung der Pufferspeicheradresse aus dem Zählerstand des jeweiligen zugeordneten Schreib- oder Lesezählers und aus dem Zählerstand des Zählers zur Kennzeichnung von TUG-2 und
- bei Vorliegen einer TU-12 oder TU-11 zur Bildung der Pufferspeicheradresse aus dem Zählerstand des jeweiligen zugeordneten Schreib- oder Lesezählers und aus dem Zählerstand des Zählers zur Kennzeichnung von TUG-2 und aus dem Zählerstand des Zählers zur Kennzeichnung von TU-12 oder TU-11 vorgesehen ist.

**9.** Synchrones Übertragungssystem nach Anspruch 8, dadurch gekennzeichnet, daß eine in der Steueranordnung (2, 14) enthaltene Pointerschaltung (5, 15) bei Vorliegen einer Pointerkennzeichnung für die H1- bzw. V1- und H2- bzw. V2-Pointerbytes jeweils zur Entnahme eines Teils eines Pointerwertes aus den oder zur Einfügung eines Teils eines Pointerwertes in die Pointerbytes vorgesehen ist.

**10.** Synchrones Übertragungssystem nach Anspruch 9, dadurch gekennzeichnet, daß ein in der Pointerschaltung (5, 15) enthaltener Pointerspeicher wenigstens zur Speicherung eines Pointerwertes an einer durch eine von der in der Steueranordnung (2, 14) enthaltenen Adressierungsanordnung (7, 18) zu bildenden Pointeradresse gekennzeichneten Speicherplatz vorgesehen ist.

**11.** Synchrones Übertragungssystem nach Anspruch 10, dadurch gekennzeichnet, daß die Adressierungsanordnung (7, 18) zur Bildung

- von fest vorgegebenen Pointeradressen für die VC-4 und VC-3,
- von von dem Zähler zur Kennzeichnung einer TUG-2 abhängigen Pointeradressen für die TU-2 und
- von von dem Zähler zur Kennzeichnung einer TUG-2 und von dem jeweiligen Zähler zur Kennzeichnung einer TU-12 oder TU-11 abhängigen Pointeradressen für die TU-12 und TU-11 vorgesehen ist.

**12.** Synchrones Übertragungssystem nach einem der Ansprüche 4 bis 11, dadurch gekennzeichnet, daß die Steueranordnung (2, 14) zur Einschreibung von Nutzdaten eines Signals in einen Pufferspeicher (1) vorgesehen ist und daß bei Übereinstimmung des neu empfangenen und des zuletzt empfangenen Pointerwertes und bei Nichtübereinstimmung des bisherigen aktuellen Pointerwertes und des neuen Pointerwertes die Pointerschaltung (5) höchstens zur Setzung des neu empfangenen Pointerwertes als aktueller Pointerwert vorgesehen ist.

**13.** Synchrones Übertragungssystem nach Anspruch 12, dadurch gekennzeichnet, daß die Pointerschaltung (5) bei Auftreten einer positiven oder negativen Stopfaktion erst nach Auftreten des H3- oder V3-Pointerbytes einer Transporteinheit zur Inkrementierung oder Dekrementierung der Pointerwerte vorgesehen ist.

**14.** Synchrones Übertragungssystem nach Anspruch 12 oder 13, dadurch gekennzeichnet, daß die Initialisierung der Zähler der Zähleranordnung (6) jeweils zu Beginn einer AU-4- oder AU-3-Verwaltungseinheit vorgesehen ist.

**15.** Synchrones Übertragungssystem nach Anspruch 12, 13 oder 14, dadurch gekennzeichnet, daß die Steueranordnung (2) ein Sperrsignal bei Nichtvorliegen von Nutzdaten erhält und daß das Sperrsignal einen AU-Positionszähler (12) zur Zählung der AU-Nutzdatenbytes sperrt.

**16.** Synchrones Übertragungssystem nach einem der Ansprüche 12 bis 15, dadurch gekennzeichnet, daß bei Übereinstimmung des jeweiligen aktuellen Pointerwertes mit dem Inhalt des entsprechenden Positionszählers die Steueranordnung (2) zur Ausgabe jeweils eines Zeigers für den Anfang einer AU-4,

45

AU-3, TU-3, TU-2, TU-12 oder TU-11 vorgesehen ist.

17. Synchrones Übertragungssystem nach einem der Ansprüche 12 bis 16, dadurch gekennzeichnet, daß die Steueranordnung (2) eine AU-Pointer-Kennung zur Kennzeichnung des Anfangs der AU-Pointer erhält, die einen AU-Pointerzähler (11) zur Zählung der AU-Pointerbytes initialisiert.

18. Synchrones Übertragungssystem nach einem der Ansprüche 11 bis 17, dadurch gekennzeichnet, daß die Steueranordnung (2, 14) zur Auslesung von Nutzdaten eines STM-1-Signals der synchronen digitalen Hierachie aus einen Pufferspeicher (1) vorgesehen ist und daß bei Lieferung eines Zeigers für den Anfang einer AU-4, AU-3, TU-3, TU-2, TU-12 oder TU-11 die Pointerschaltung (15) zur Bildung des aktuellen Pointerwertes aus dem Zählerinhalt des entsprechenden Positionszählers vorgesehen ist.

19. Synchrones Übertragungssystem nach Anspruch 16, dadurch gekennzeichnet, daß die Pointerschaltung (15) bei einer positiven oder negativen Stopfung zur Inkrementierung oder Dekrementierung des aktuellen Pointerwertes vorgesehen ist.

20. Synchrones Übertragungssystem nach einem der Ansprüche 5 bis 19, dadurch gekennzeichnet, daß die Steueranordnung (2, 14) zur Auslesung von Nutzdaten eines STM-1-Signals der synchronen digitalen Hierachie aus einen Pufferspeicher (1) vorgesehen ist und daß die Steueranordnung (14) eine Sende-Rahmenzähleranordnung (19) mit einem Spaltenzähler zur Bestimmung der Spalte und einen Zeilenzähler zur Bestimmung der Zeile in dem STM-1-Rahmen enthält.

21. Synchrones Übertragungssystem nach Anspruch 20, dadurch gekennzeichnet, daß die Initialisierung der Zähler der Zähleranordnung (17) jeweils zu Beginn der 9. Spalte und der 4. Zeile im Rahmen des Signals vorgesehen ist.

22. Synchrones Übertragungssystem nach Anspruch 20 oder 21, dadurch gekennzeichnet, daß der Spalten- und Zeilenzähler in der Sende-Rahmenzähleranordnung (19) zur Bestimmung von Pointerkennzeichnungen für die AU-Pointer dient.

23. Schaltungsanordnung zur Bestimmung der Datenbytes eines zu empfangenden oder zu bildenden Signals eines synchronen Übertragungssystems mit einer Steueranordnung (2, 14), die wenigstens einen Zähler (11, 19) zur Markierung der Pointerbytes jeder auftretbaren hochbitratigen Transporteinheit enthält, die wenigstens einen Zähler (6, 17) zur Markierung der Datenbytes mit einem Zählerstand jeder auftretbaren hochbitratigen Transporteinheit enthält, die für jede auftretbare Gruppe von niederbitratigen Transporteinheiten in jeder auftretbaren höchstbitratigen Transporteinheit wenigstens einen Positionszähler (6, 17) enthält, der zur Markierung der Datenbytes mit einem Zählerstand in einer niederbitratigen Transporteinheit der Gruppe vorgesehen ist und die anhand der Zählerstände und der Information über die Transporteinheiten des Signals wenigstens zur Kennzeichnung der Nutzdatenbytes und der Pointerbytes vorgesehen ist.

FIG.1

FIG.2

TU - 11

TU - 12

TUG - 2

TUG - 2

| 1 | 2 | 3 | 4 | 1 | 2 | 3 | 4 | 1 | 2 | 3 | 4 |

| 1 | 2 | 3 | 1 | 2 | 3 | 1 | 2 | 3 | 1 | 2 | 3 |

# FIG.3

TUG - 2

VC POH

VC - 3

| 1 | 2 | 3 | 4 | 5 | 6 | 7 | 1 | 2 | 3 | 4 | 5 | 6 | 7 |

| 1 | 2 | 3 | 4 | 5 | 6 | 7 | 1 | 2 | 3 | 4 | 5 | 6 | 7 |

1 2 3 4 5 6...

... 84 85

# FIG.4

TUG - 2

TUG - 3

| 1 | 2 | 3 | 4 | 5 | 6 | 7 | 1 | 2 | 3 | 4 | 5 | 6 | 7 |

| 1 | 2 | 3 | 4 | 5 | 6 | 7 | 1 | 2 | 3 | 4 | 5 | 6 | 7 |

1 2 3 4 5 6...

... 85 86

# FIG.5

TUG - 3

(A)

1    86

TUG - 3

(B)

1    86

TUG - 3

(C)

1    86

POH

VC - 4

| | | | | A | B | C | A | B | C | A | B | C | A | B | | | A | B | C | A | B | C | A | B | C | A | B | C |

1 2 3 4 5 6...         ... 260 261

# FIG.6

AU - 3

H1 H2 H3   (A)

AU - 3

H1 H2 H3   (B)

AU - 3

H1 H2 H3   (C)

AU - 6

| A | B | C | A | B | C | A | B | C | A | B | C | A | B | C | A |

| C | A | B | C | A | B | C | A |

# FIG.7

1      4      6          261

VC - 4

| P O H | | H1 | H1 | H1 | |
| | | H2 | H2 | H2 | |
| | | H3 | H3 | H3 | |
| | | 3 * TU - 3 | | | |

FS

# FIG.8

49

FIG.9

FIG.10

50

FIG.11

FIG.12

FIG.13

FIG.14

FIG.15

EP 0 578 315 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 440 128 (SAT) | 1-6,23 | H04J3/16 |
| A | * das ganze Dokument * | 7-22 | |
| | | | |
| Y | DE-A-4 018 687 (SIEMENS) | 1-6,23 | |
| | * Spalte 3, Zeile 3 - Zeile 23 * | | |
| A | * Spalte 3, Zeile 52 - Spalte 5, Zeile 40 * | 7-22 | |
| | * Abbildungen 4,6 * | | |
| | | | |
| A | WO-A-9 006 645 (TRANSWITCH) | 1-23 | |
| | * Seite 15, Absatz 2 * | | |
| | * Seite 23, Absatz 2 * | | |
| | * Seite 26, Zeile 3 - Zeile 10 * | | |
| | * Seite 26, Zeile 21 - Seite 28, Zeile 24 * | | |
| | * Seite 34, Zeile 10 - Seite 35, Zeile 9 * | | |
| | * Seite 41, Zeile 1 - Seite 43, Zeile 9 * | | |
| | * Seite 44, Zeile 4 - Seite 46, Zeile 14 * | | |
| | * Abbildungen 2A,2B,3A,4,7 * | | |
| | * Abbildungen 9A,9B * | | |
| | | | **RECHERCHIERTE SACHGEBIETE (Int. Cl.5)** |
| A | NTZ NACHRICHTECHNISCHE ZEITSCHRIFT. Bd. 44, Nr. 10, Oktober 1991, BERLIN DE Seiten 686 - 700 L. BECKER ET AL. 'Netzknoten Multiport' * Seite 689, rechte Spalte, Zeile 26 - Seite 670, linke Spalte, Zeile 8 * | 1,23 | H04J |

Der vorliegende Recherchenbericht wurde für alle Patentansprüche erstellt

| Recherchenort | Abschlußdatum der Recherche | Prüfer |
|---|---|---|
| DEN HAAG | 08 SEPTEMBER 1993 | PIEPER T. |